# EUROPEAN PATENT SPECIFICATION

(11) **EP 1 203 487 B1**
(45) Date of publication and mention of the grant of the patent: **30.03.2005**
(21) Application number: 00946176.5
(22) Date of filing: 20.07.2000
(51) Int. Cl.: H04N 1/06

(54) **IMAGE SETTING APPARATUS**
BILDSETZGERÄT
APPAREIL DE FORMATION D'IMAGE

(30) Priority: 27.07.1999 GB 9917475; 17.05.2000 GB 0011874
(43) Date of publication of application: 08.05.2002
(73) Proprietor: Synectix Limited, Cheltenham, Glos GL52 6QP (GB)
(72) Inventor: RICKETTS, John, Peter, Gloucester GL20 0LX (GB)
(74) Representative: Newell, William Joseph
(86) International application number: PCT/GB2000/002805
(87) International publication number: WO 2001/008404

(56) References cited:
- EP-A- 0 633 543
- WO-A-95/20177
- DE-A- 3 521 482
- DE-A- 4 410 902
- GB-A- 2 280 964
- US-A- 3 588 335
- US-A- 4 148 076

## Description

This invention relates to image setting apparatus.

In a typical colour printing process, four colour plates are used to print superimposed images to build up a composite image. Each plate is typically produced by scanning a modulated light or radiation beam over a light or radiation sensitive plate. The plate is then developed or otherwise treated to render the surface selectively ink-repellent or ink attracting, according to the nature of the plate, to provide the particular colour image required. The complete set of colour plates is loaded into a printing machine. It is extremely important to ensure that the various plates are precisely registered otherwise the resultant image quality is poor. At each stage therefore great care must be taken to preserve registration. In existing machines a number of different registration techniques are used. In the simplest of these one or more of the straight edges of the plate is registered against respective registration datums on the image setter platen and the print drum. For more precise location, a registration punch on the image setting platen may punch a registration mark or marks, such as two spaced registration holes or cut outs in the edge of the plate, outside the image area. The printing drum has corresponding lugs or pegs which pick up on the registration lugs or cut outs in the plate. A variation of this technique requires pre-punched plates with both the image setting platen and the print drum having registration lugs or pegs.

An important step in the computer-to-plate process is loading and unloading the light sensitive plate from the platen or drum. This step requires great care because the photo-sensitive emulsion on the surface of the plate may easily be damaged by scratching or scuffing as it is loaded or unloaded from the platen and any scratches, scuffing or other surfacial damage will result in unwanted artefacts in the image printed by the exposed and developed plate. Another important requirement is that the plates be properly registered and clamped in position on the platen before the traverse movement of the platen commences. There are a variety of different loading and unloading devices available for loading and unloading the plate from the platen or drum. However, many of these are complex and require several different actuators and related sensors all under the control of a computer control system in order to co-ordinate the loading/unloading and registration of the plate.

It is an object of this invention to provide a novel form of loading and unloading mechanism for transferring a plate to and from the platen with a low risk of scuffing or surface scratching and which may be implemented with a relatively low number of actuators.

Accordingly, in one aspect, this invention provides an image setting apparatus, as set out in claim 1.

In this arrangement, a plate moves from a lateral station and then is caused to conform to the curved or part-cylindrical internal support surface by the moveable guide means of said plate positioning assembly.

Preferably said moveable guide means comprises at least one endless platen guide belt having an external drive surface for contacting and engaging in use the exposed surface of said plate, with nil or relatively low relative movement, the or each endless belt following a path including a section conforming to the curved internal support surface over which said plate passes in use. Thus the platen guide belt may have a section of arcuate form closely matching that of the adjacent portion of the curved or part-cylindrical internal support surface.

In a particularly preferred embodiment, the plate positioning assembly includes two endless platen guide belts arranged to follow respective spaced planar paths at longitudinally spaced locations over said internal support surface.

To provide smooth transport of the plate as it slides over the surface of the platen as it moves from the lateral loading/unloading station towards the loaded position, the or each plate drive belt preferably includes a generally compressible conformable outer pressure surface defining said drive surface for engaging the exposed surface of the plate during movement of the plate.

To ensure synchronous movement of the belt with the drive motor (and the or each other belt if provided) the inner surface of the or each platen guide belt is preferably toothed.

Preferably, said plate positioning assembly indudes a motor for driving said moveable guide means at substantially the same surface speed in use as the plate as it moves towards its loaded position. As to be described below, where there are other drive means transferring drive to the plate as it moves between the loaded position and the loading/unloading station, the surfacial speeds of the surfaces of the drive means which contact the plate are preferably synchronised.

Preferably, said plate positioning assembly includes an inlet drive means for engaging in use a plate as it crosses the edge of the platen when passing to or from the loading/unloading station. The inlet drive means may therefore be designed to receive in use a plate offered at a generally transverse angle and feed the leading edge of said plate towards to the moveable guide means on said plate positioning assembly.

The inlet drive means may comprise at least one inlet drive belt means drivable to assist movement of said plate in use. The drive means may co-operate with a suitably profited low friction, delivery guide belt means adjacent the interface between said platen means and said loading/unloading station.

In a preferred arrangement, said inlet drive means comprises a plurality of spaced inlet drive means disposed to move in respective spaced parallel planes. A motor is preferably provided for driving said inlet drive belt means in use. In a particularly preferred arrangement, a common drive motor drives said inlet drive belt means and said platen guide belt means, and a gear train may be provided to distribute the drive from the motor to said inlet drive belt means and said platen guide belt means.

Said plate positioning assembly preferably further indudes a plate positioner nip roller engageable with a corresponding platen nip roller associated with said platen and operable in use to co-operate to draw a plate introduced into the nip towards the loaded position. The plate positioner nip roller preferably comprises a generally cylindrical roller having a compressible drive surface and having an extended contact surface relative to the platen nip roller. It will be appreciated that, in use, the expose side of the plate (i.e. that carrying the emulsion) will be contacted by the plate positioner nip roller. Accordingly the plate positioner nip roller preferably contacts the expose side of the plate in use along substantially the whole of its axial length, in order to distribute the contact pressure substantially evenly therealong.

The nip rollers are preferably driven by means of a motor which drives said plate positioner nip roller. As outlined above, it is generally preferred for the surface speeds of any of the drive means which contact the emulsion surface to be synchronised and accordingly in a preferred arrangement the plate positioner nip roller is driven by the same motor that drives the inlet drive belt means and the platen guide belt means. Again the drive is preferably distributed between these components by means of a gear train.

Preferably, said plate positioner nip roller and said platen nip roller are relatively moveable between engaged and disengaged positions. Preferably, drive means is provided for moving said platen nip roller between engaged and disengaged positions. In a particularly preferred arrangement, to avoid the need to mount a motor on the platen and provide the necessary electrical connections, the nip engagement drive means preferably comprises a drive device which remains relatively stationary during longitudinal movement of said platen and which co-operates with said platen nip roller when said platen is in the loading/unloading position.

Preferably, said plate positioning assembly is moveable between a first (loading/unloading) position in which said moveable guide means is in contact with or in dose guiding proximity to said internal support surface, and a second (dear) position in which the moveable guide means is spaced dear of said internal support surface. In the dear position, there is sufficient distance between the moveable guide means and the internal support surface such that, in use, when a plate is damped to the internal support surface by alternative means (e.g. by suction) the moveable guide means may move longitudinally relative to the internal support surface without risk of contacting the plate.

Preferably the plate positioning assembly is also moveable to a third (damping) position in which the moveable guide means is urged in use into contact with the exposed surface of the plate to damp said plate firmly against the internal support surface. The damping position may be used to damp the plate to the internal support surface, for example whilst the plate is punched at the registration position and also to hold the plate firmly in position whilst an alternative form of damping is supplied (e.g. by suction means).

Although the apparatus thus far described could operate with a fixed platen and a plate positioning assembly and scanner head assembly which move relative to the fixed platen, the opposite arrangement is preferred wherein said plate positioning assembly is mounted on a relatively fixed structure and said platen is moved longitudinally with respect thereto by means of said traverse drive means. In this configuration, where the plate positioning assembly remains substantially fixed during traverse movement of the platen, the plate positioning assembly is preferably mounted on a relatively fixed structure for limited movement in the longitudinal direction against a bias, and said plate positioning assembly and said fixed structure preferably include co-operating cam/cam follower means responsive to longitudinal movement of the plate positioning assembly relative to said fixed structure to cause said plate positioning assembly to move from said free position to said loading/unloading position when said platen means moves towards the loading/unloading position. In other words, limited longitudinal movement of the plate positioning assembly relative to said fixed structure is translated into a opening/closing movement of the plate positioning assembly relative to the platen.

Preferably said cam/cam follower means are further responsive to further longitudinal movement of the plate positioning assembly to cause said plate positioning means to move to said damping position when said platen means is moved from its loading/unloading position to a registration position.

Preferably, said platen means and said plate positioning assembly include co-operable drive abutments engageable in use to transfer drive in the longitudinal direction from said platen means to said plate positioning assembly as the traverse drive means moves the platen in use from an exposed position towards the loading/unloading position and beyond. Where provided this feature provides an important advantage in that the relative damping and separating movements of the plate positioning assembly and the platen means are driven by the traverse drive means and so no separate drive actuator is required to effect the damping and separation movement of the plate positioning assembly.

Accordingly, in a preferred embodiment, the only prime mover required on the plate positioning assembly is a motor which drives the inlet belt drive means, the platen guide belt means and the platen nip roller. The only other actuator required for the plate feed assembly in the vicinity of the platen is the nip engagement drive means which again may be separate from the platen. This considerably reduces the complexity of the arrangement and facilitates manufacture operation and servicing. However, it should be noted that we do not exclude the possibility of providing separate synchronised drives for one or more of the inlet guide belts, the plate drive belts, and the plate positioner drive roller, for example where the apparatus is designed to handle larger plates. Also, the longitudinal increments drive to the plate positioner may be imparted by means of a separate actuator rather than by picking up movement of the platen via engageable drive abutments.

Preferably, said drive abutments are disposed to transfer a further increment of longitudinal movement of said plate positioning assembly as the traverse drive means moves the platen from the loading/unloading position to a registration position.

Preferably, the platen means includes suction means for applying suction to said support surface securely to hold a plate on said support surface during exposure thereof. Preferably said suction means includes control means responsive to said relative traverse movement to apply or release said suction as said platen moves towards said registration position, or away therefrom, respectively.

In image setters where the platen is moved relative to the scanner head by means of a leadscrew arrangement, great care must be taken to align accurately the bearings at opposite ends of the leadscrew and the connection between the leadscrew nut and the plate. In a typical conventional assembly the bearing housings at one or both ends of the leadscrew are accurately fixed and then a complicated ball-jointed damp is used to position the nut mounting correctly whilst also providing a rigid connection. We have found that this arrangement is awkward to rig and requires expensive components. We have designed an alternative arrangement in which the drive torque throughout a revolution is generally uniform as required in precision image setters but which ameliorates some of the disadvantages of the above arrangement.

Accordingly, we provide an arrangement in which the leadscrew main bearing assembly is fully floating with an "x" mounted angular contact set, and a flexural coupling is provided between the leadscrew nut and the platen. This has several advantages in terms of eliminating angular alignment procedure, lower cost and reduced tolerance requirement.

Preferably, said flexural coupling comprises an element allowing limited flexure in two mutually orthogonal directions relative to the rotational axis of the leadscrew.,

In another aspect, we have developed a new form of image setting apparatus in which, in contrast to typical such apparatus, the scanner head assembly remains longitudinally stationary, whilst the platen is moved. This has considerable benefits in terms of design of the image setting drum or platen, and allowing the possibility of shuttle operation. We have also developed a further modification to the design which further simplifies construction of the platen or drum and provides operational and technical advantages.

In this arrangement, the registration means is fixedly mounted to the base structure and this provides considerable advantages in that the registration means does not have to move with the rest of the platen means as the platen means relative to the scanner head assembly as the plate is exposed. This means that the mass and complexity associated with the registration means may be confined to the fixed structure and so the platen does not have to support the registration means nor do the services such as electrical power and signalling have to be transferred across a stationary/moving interface. Furthermore mounting the registration means on the base rather than the platen leaves more room on the platen and so the platen may be smaller, or support larger plates. Moreover the arrangement facilitates a flexible system where the platen, due to its increased simplicity, may be readily de-mountable and interchangeable with those in other image setters.

The registration means may take many forms; in one embodiment there may be one or more passive datum surfaces against which the edge or edges of a plate may be placed in registration. In another embodiment the registration means may comprise punch means for punching out one or more registration holes or cut outs in an edge region of the plate. In yet a further embodiment, the registration means may comprise one or more registration lugs for co-operating in use with complementary cut outs in the edge regions of the plate.

The platen means may take many forms; in a particularly preferred embodiment it comprises an upwardly facing curved or part-cylindrical support surface.

The upwardly open arrangement, combined with the feature that the platen moves whilst the spinner head assembly stays longitudinally stationary, means that the platen may be parked in a position longitudinally spaced from the spinner head assembly, so that it is easily accessible from the front and above, for facilitating removal of the plate. Alternatively the platen means may comprise an unitary or multi-part cylindrical drum.

Preferably the scanner head assembly is disposed on the base structure such that, when said platen means is in said registration position with an edge region adjacent said registration means, an opposed edge region of said platen lies adjacent said scanner head assembly.

Preferably, said apparatus further indudes plate positioning means operable in use to draw a plate generally laterally from a plate handling station over said support surface towards the position required for exposing said plate. In this instance, it is preferred to co-ordinate the traverse drive means and the plate positioning means to effect registration of said plate without further actuators being required to shift the plate. Thus where the arrangement includes plate positioning means, the apparatus may include plate registration control means operable to control said plate positioning means and said traverse means during a loading routine as follows:-
(i) initially to position said platen a short distance away from said registration means;
(ii) thereafter to cause said plate positioning means to draw a plate onto said platen means from said plate handling station and to advance said plate until the leading edge thereof reaches a threshold position;
(iii_)thereafter to cause said traverse means to move said platen means to a registration position adjacent said registration means to effect registration in one sense, and
(iv) thereafter to cause said plate positioning means further to advance said plate until the leading edge thereof reaches a datum position corresponding to a second registration,

The apparatus preferably indudes first and second position detectors for detecting attainment by said plate of said first threshold position and said data position respectively. Preferably, to reduce the amount of wiring required and to provide an unambiguous signal, the detectors are preferably electrically connected in parallel in a sensing circuit with said first position detector being normally closed and said second position detector being normally open , whereby operation of said first and second detectors in sequence causes a pulse output with the second edge of said pulse confirming that both said first and second positions have been attained.

Conventionally, in an image setting apparatus, the platen is fixed and the scanner head moves relative to the platen. Orthodox engineering know-how suggests that this is the optimum design because the platen is large and heavy and thus awkward to move smoothly and precisely, whereas the scanner head assembly is normally much lighter and easier to mount for precise optical movement. We have found, however, that significant advantages accrue from reversing this orthodox configuration and making the scanner head assembly fixed whilst the platen moves relative thereto. For example this tends to allow freer access to the platen and also means that any plate loading/unloading devices do not have to be moved out of the way prior to exposure of the plate, because the platen can be advanced away from the loading/unloading device prior to exposure. Also mounting and operation of the scanner head assembly can be considerably simplified.

It is important in an image setter to ensure that not only is the plate accurately and reproducibly registered relative to the platen for exposure, but also that the data output to the scanner head is correctly initialised having regard to the longitudinal position of the platen relative to the scanner head.

It will be appreciated that the same configuration may be employed when the platen is stationary and the slave head assembly is moved longitudinally relative thereto.

An image setting apparatus of a particular design may be sold in many different countries around the world. There is a significant expense involved in selecting or adjusting voltage-sensitive components to suit the mains voltage available in a particular country of intended use. In particular, in an image setting apparatus where, in use, a plate is held on the platen by means of suction, the motor required to operate the suction pump will usually have to be changed according to whether the mains voltage is 240 volts A.C. or 110 volts A.C. We have developed a modified motor which overcomes this problem.

Accordingly, in another aspect of this invention there is provided an image setting apparatus suitable for multiple voltage use, said apparatus comprising a platen means, a suction arrangement for applying suction to hold a plate to be exposed on said platen, said suction arrangement comprising a suction pump driven by an A.C. motor, the motor having multiple voltage windings and the arrangement further including means operable in use to detect the applied mains voltage and for selecting the appropriate windings in said motor.

The invention also extends to an image setting method in which a plate to be exposed is introduced laterally onto a platen means by a movable guide means extending across at least a higher portion of said platen means which guides the plate over the surface of said platen means to an expose position.

Preferably, the plate is registered against a registration means separate from the platen means by co-ordinating movement of the movable guide means and the main traverse drive for the platen means.

Whilst the invention has been described above, it extends to any inventive combination set out above or in the following description. In particular it should be noted that the invention extends to methods of image setting, and to registration, use and setting up of the image setting apparatus as described above.

By way of example only, two related embodiments of the invention will now be described in detail, reference being made to the accompanying drawings, in which:-
Figure 1 is a front perspective view of an image setting apparatus alongside the plate loading/unloading station of a plate handling device, the image setting apparatus being shown with the plate positioning assembly hinged upwardly out of the way to reveal the upper surface of the curved platen or drum;
Figure 2 is a view similar to Figure 1 but with the plate positioning assembly in an operative position but with the stand and the plate loading/unloading station removed, for clarity;
Figure 3 is a perspective view from below of the plate positioning mechanism of the image setting apparatus, with the twin parallel platen guide belts removed for clarity;
Figure 4 is a view of the platen in isolation;
Figure 5 is a rear detail view of the platen showing the platen nip roll assembly;
Figure 6 is a detail view of the platen nip roll assembly;
Figure 7 is a detail view of the nip engagement drive;
Figure 8 is a schematic view showing the relative position of the platen nip roll assembly and the nip engagement drive when the platen is in a loading/unloading position;
Figure 9 is a schematic view showing the mounting of the leadscrew on the base structure and the connection between the leadscrew nut and the platen and also showing the optical sensor which initialises data output;
Figure 10 is a detailed schematic view of the optical sensor of Figure 9;
Figure 11 is a schematic view showing the path from the loading station of a non-aligned plate relative to the registration edge and the first and second plate edge sensing positions;
Figure 12 is a schematic block diagram of the control system for the embodiment of Figures 1 to 11;
Figure 13 is a perspective view of a further embodiment of image setting apparatus in accordance with this invention, with the platen in its registration position;
Figure 14 is a perspective view of the image setting apparatus of Figure 13, with the platen in its fully extended position and
Figure 15 is a schematic, detailed, developed view of a typical form of registration device for use in the further embodiment.

The embodiments of image setting apparatus illustrated in the Figures are intended to receive from a computer or other data source digitised data representing an image to be printed, and to control the scanning, modulation and traverse of a beam over a plate.

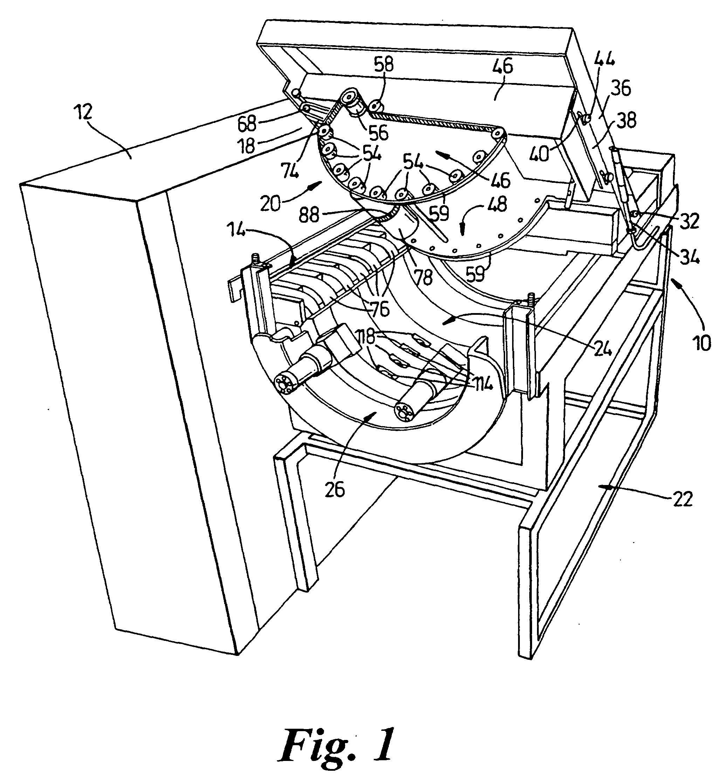

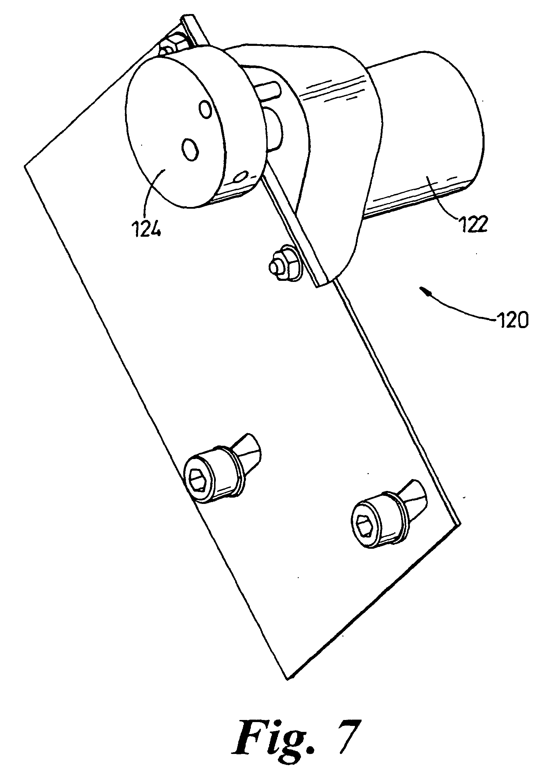

Referring to the embodiments of Figures 1 to 11, and particularly to Figure 1, there is shown an image setter 10 of this invention positioned alongside a plate handling station 12 which operates to deliver and receive plates to and from the image setter apparatus via an elongate supply slot 14 and assisted by a series of commonly driven delivery drive belts 16 in conjunction with the inlet drive assembly 18 of the plate positioning assembly 20 as to be described in further detail below.

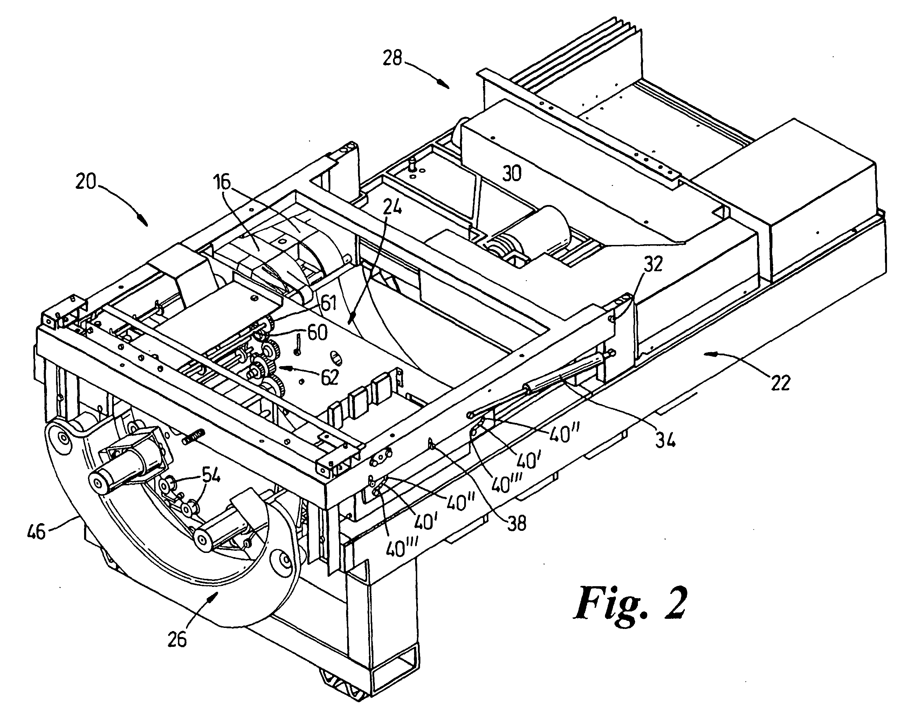

The image setting apparatus 10 is mounted on an optically rigid base structure 22 and consists of four main assemblies, namely a platen or drum assembly 24, a registration assembly 26, the plate positioning assembly 20 and the scanner head assembly 28 comprising the scanner head 30 (Figure 2) together with associated optical components. In this arrangement, the scanner head assembly 28 is longitudinally fixed, and the platen 24 is longitudinally moveable relative thereto from the loading/unloading position (as shown in Figures 1 and 2) to an expose position where the scanner head 30 scans a modulated laser beam along a scan line generally transverse to the longitudinal axis of movement of the platen 24. At the front end of the apparatus, as viewed in Figure 1, the registration assembly 26 is longitudinally fixed. Likewise, the plate positioning assembly 20 remains longitudinally fixed during normal operation of the image setting apparatus apart from small longitudinal incremental movement during the loading/unloading routines, to be described below. For maintenance the plate positioning assembly 20 is hingeable about a horizontal axis by means of pivots 32 secured to the base structure 22, the pivoting motion being supported by respective gas springs 34.

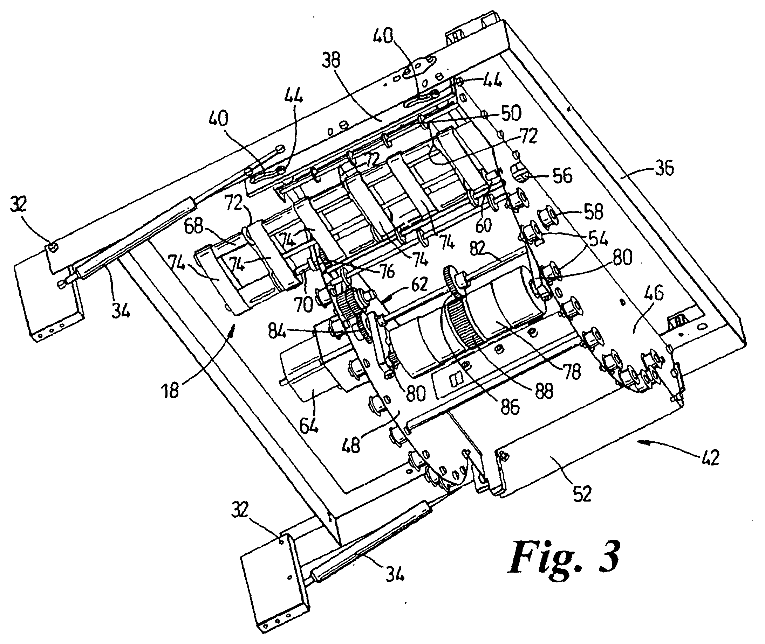

The plate positioning assembly 20 comprises a main chassis frame 36 of rectangular form pivoted at its rearward end to the pivots 32 (see particularly Figures 1 to 3). The two side members of the chassis 36 support respective suspension plates 38 (only one of which is seen in Figures 1 to 3) which are securely attached to the side members but each defining a respective pair of profiled cam slots 40 by which the main frame of the plate positioning assembly is supported, by means four cam pegs 44 which ride in the slots 40. As to be described in more detail below, the profiled cam slots are made up of a central, generally horizontal portion 40' at the opposite ends of which are respectively upwardly indined portions 40" and downwardly indined portions40'''. Accordingly, the main frame 42 of the plate positioning assembly is capable of limited longitudinal movement with respect to the main chassis 36, with longitudinal movement of the main frame being translated into a component of movement in a transverse direction, for damping or retracting the main frame 42, as to be described below. The main frame 42 is biased to the left (as viewed in Figure 3) by means of a pair of tension springs (not illustrated) which extend between the main chassis and the suspended frame to either side thereto.

The main frame 42 is made of spaced parallel forward and rearward plates 46 and 48 mainly of semicircular form. The forward and rearward plates are linked by respective cross-frame members 50 and 52 to form a rigid structure. Around the arcuate peripheries of each of the semicircular plates 46 and 48 is provided a series of guide pulleys 54 which, together with a toothed drive pulley 56 (only one of which is seen in the Figures), and a further tensioning pulley 58 define an endless path for a toothed platen guide belt 59. The drive belt 54 has a conformable/compressible, relatively high friction external surface for contacting the emulsion side of a plate to be exposed as the plate is slid over the upper surface of the platen 24, as to be described below. The two toothed drive pulleys 58 are connected to a common drive shaft 60 extending generally longitudinally therebetween. Immediately forwardly of the rearward semicircular plate 48 the common drive shaft carries a drive gear 61 which is connected via a gear train 62 to a drive motor 64. The drive motor 64 also drives via the gear train 62 the other plate-contacting drive belts as to be described herebelow.

At the inlet side of the plate positioning assembly (i.e. the side of the platen 24 over which plates pass to or from the plate handling apparatus 12), there is provided an inlet drive assembly 18 comprising a pair of spaced parallel shafts 68, 70 respectively maintained in this configuration by a series of plates 72, through one of which the inlet drive assembly 66 is connected to the rearward semicircular plate 48 by a link (not shown). Extending between the shafts 66 and 68, and in driving contact therewith, is a series of drive belts 74 having soft, relatively high friction drive surfaces. The drive shaft 70 carries a drive gear 76 which is connected to the gear train 62 driven by the common drive motor 64. In this manner, the surface speed of the inlet drive belts 74 is kept in synchronism with that of the platen guide belts 59 Also, in operation, the surface speed of the drive belt 74 is matched to that of the delivery drive belt 16 associated with the plate handler 12.

With reference to Figures 1 and 2, the co-operation of the inlet drive belts 74 and the delivery belts 16 cause a plate introduced via the delivery slot 14 and towards the platen 24 to be smoothly flexed in the appropriate direction to slide smoothly over the surface of the platen 24 when guided by the platen guide belts 59.

Partway down the semicircular plates 46 and 48, and designed to receive the leading edge of a plate introduced over the surface of the platen 24 by the inlet guide belts 74 and the delivery guide belts 16, is a nip roller 78 which is pivoted at its ends to respective swinging links 80 to a drive shaft 82 which carries at its rearward end a drive gear 84 which is connected to the drive train 62. At its centre portion, the drive shaft 82 carries a drive gear 86 which meshes with a sunken toothed drive portion 88 provided on the mid-portion of the nip roll 78. Again the nip roll 78 is therefore driven by the common motor 64 via the gear train 62. The nip roller 78 is suspended by the swinging links 80 so that it may swing down under gravity to engage the emulsion side of a plate as it moves across the surface of the platen. Again the surface speed of the nip roll 78 is synchronised with those of the inlet drive belts 74 and the platen guide belts 59 The nip roll 78 is covered with a soft, relatively high friction coating over an extended surface area.

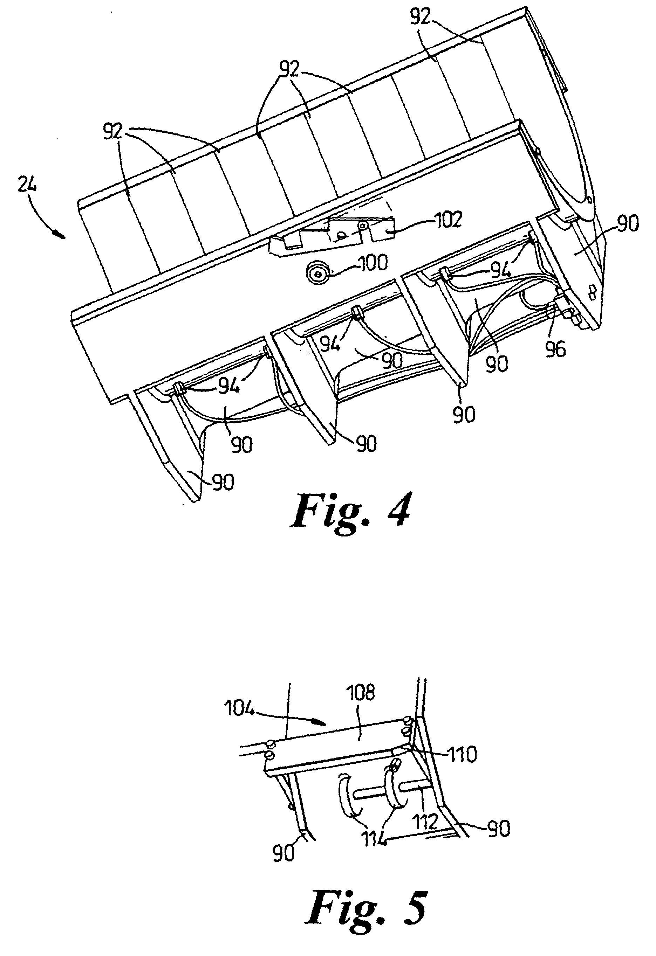

Referring now to Figure 4, the platen or drum 24 is shown removed from the image setter apparatus, and the view is taken from the right hand side of the apparatus as viewed in Figure 1. The platen 24 in this arrangement is of semi-cylindrical form defining an upwardly facing support surface for a plate to be exposed. The platen indudes stiffening flanges 90. Suction is supplied to the support surface of the platen by means of a series of suction grooves 92 formed in the support surface and connected to respective suction outlets 94 on the underside of the platen which are connected to a suction manifold 96 and thence back to a suction pump (not shown). The platen 24 indudes a precision bearing 100 which runs along an optically straight guide surface optically rigidly coupled to the fixed base structure 22 and extending parallel to the longitudinal 'z' axis of the drum. On the further side of the drum (i.e. the one not visible in Figure 4) there is provided an elongate reference rail which extends in the 'z' direction and which supports two carriages connected to the drum and which are constrained in the 'x' and 'y' directions. To one side of the platen is connected a plate positioning frame drive abutment 102 which engages the rearward surface of the rearward semicircular plate of the plate 46 of the plate positioning assembly during the loading/unloading and registration routines to be described below, for transmitting longitudinal drive movement to the main frame of the plate positioning assembly.

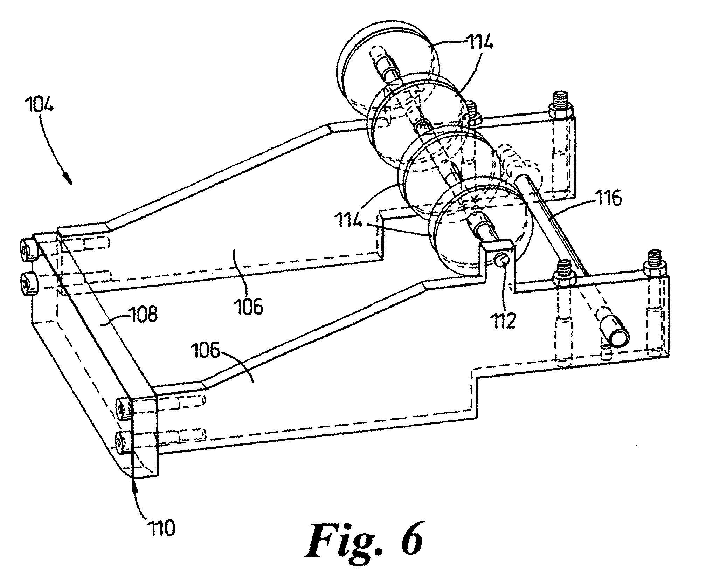

Also pivotally attached to a spaced pair of the stiffening flanges 90 on the further side of the platen and pivotable under gravity is a platen nip roller assembly 104. Figure 5 is a scrap view on the rear of the platen showing the nip wheel assembly relative to the stiffening flanges 90, whilst Figure 6 is a detailed view of the nip roll assembly. The platen nip roll assembly indudes two side links 106 bridged by a bridging link 108 which also acts as a bias weight and furthermore has at one side thereof a cam-engaging surface 110. The side links support a nip roll shaft 112 on which are provided four nip rollers or wheels 114. The assembly is pivotally connected between the flanges, as shown in Figure 5, by means of a further pivot shaft 116. Once assembled, the nip rollers 116 co-operate with respective slots 118 in the surface of the platen and the assembly 104 may pivot about the pivot shaft 116 between an extended position in which part of the peripheries of the nip rollers protrude through the slots 118 to stand proud of the support surface of the platen, and a retracted position in which the nip rollers are below the support surface, under the influence of the mass of the crosslink 108, and the links 106 contact a stop on the underside of the platen.

The platen nip rollers 114 are designed to co-operate with the plate positioning nip roller 78 to define therebetween a drive nip for assisting movement of the plate over the surface of the platen during loading and unloading.

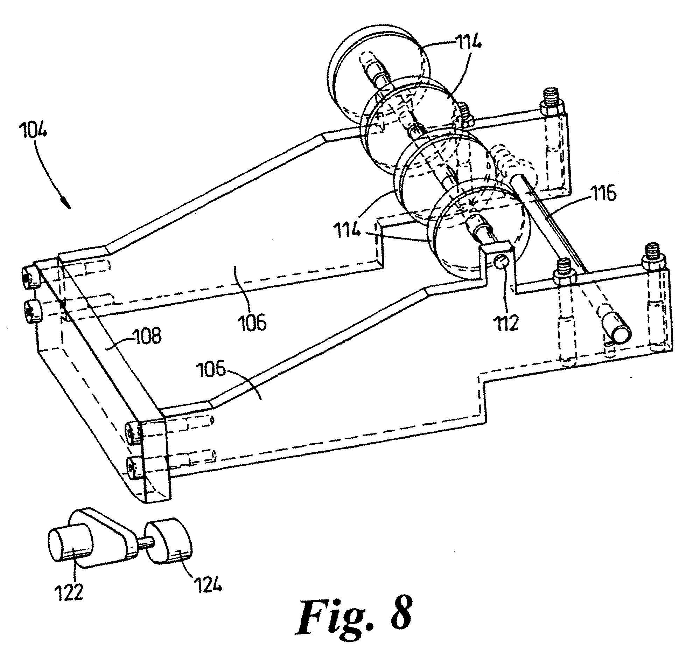

The platen nip roller assembly is driven from a retracted position to the nip position by means of a nip engagement drive 120 mounted on the fixed base structure 22. The nip engagement drive 120 is positioned such that the crosslink 108 is brought into operational relationship therewith when the platen is moved to its loading/unloading position. The nip engagement drive comprises a motor/gearbox 122 driving an eccentric cam 124 which co-operates with the cam engagement surface 110 on the cross-link 108. Figure 8 shows schematically the relative position of the nip engagement drive and the cross link when the platen is in its loading/unloading position. Actuation of the nip engagement drive causes the eccentric cam 124 to rotate to cause the plate nip roller assembly to lift to bring the nip rolls thereof into engagement with the nip roller 78 on the plate positioning assembly (or the under surface of a plate which itself is in contact with the nip wheel 78).

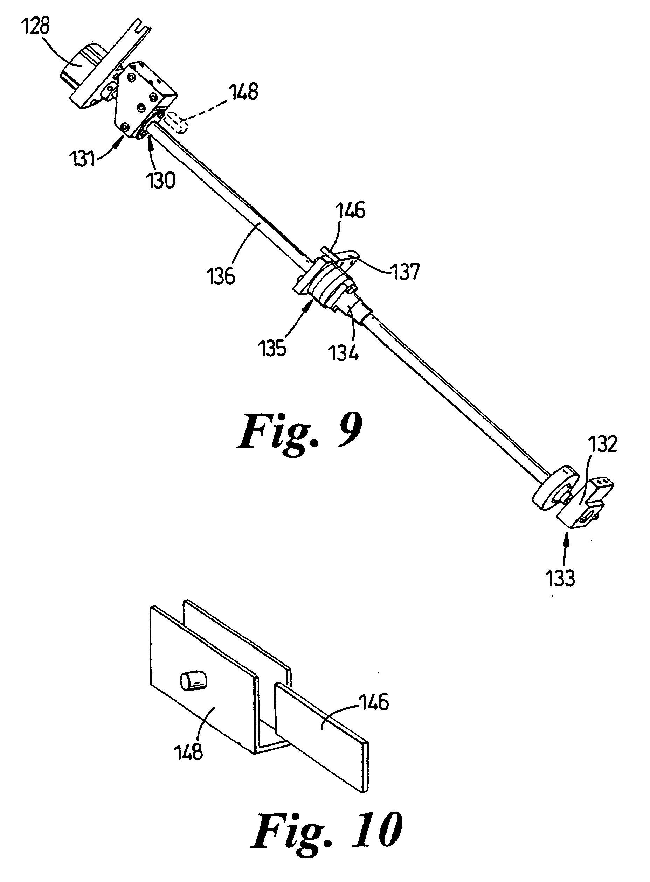

Referring now to Figure 9 there is shown schematically the leadscrew arrangement which is mounted on the fixed base structure 22 and provides precise linear drive to the platen 24. The arrangement comprises a leadscrew 126 which is driven by a motor 128 at one end and supported at opposite ends by means of respective bearing arrangements 130 and 132. The arrangement is designed such that the torque experienced by the motor 128 as it turns and drives the platen is substantially uniform throughout a revolution, thus improving accuracy of controlling and positioning. In this arrangement, the bearing arrangement 130 is a preloaded angular contact set of two bearings in an 'x' configuration to provide linear constraint in the 'z' direction but an amount of angular flexibility about the intersection of the lines of forces in the 'x' configuration. The bearing arrangement 132 is a deep groove bearing arrangement. Each of the bearings is mounted on the fixed structure by means of respective mounting blocks 131, 133, which allow angular adjustment movement of the bearings in the 'x' and 'y' directions during assembly and prior to final tightening of the mounts.. The leadscrew nut 134 is threaded engaged with the leadscrew 136 in conventional manner but attached to the platen 24 by means of a platen bracket 137 coupled to a gimbal arrangement 135 which allows angular movement about mutually orthogonal x and y axes.

When setting up the machine, the components are assembled as described although the bearing 131 and 133 mountings are only lightly secured in position (so that they may move a small amount if required in the x and/or y directions). The leadscrew 136 is then operated to drive the nut to one of its end positions, and the mounting (131;133) then tightened slightly to temporarily fix that bearing in the x and y directions. The leadscrew is then operated to run the nut to the other end position and the mounting at that end is then tightened similarly. The process is repeated finally to tighten the mounting arrangements to their final position. This arrangement provides a considerable benefit over existing arrangements as it simplifies the mountings between the leadscrew bearings and the fixed base structure, and between the leadscrew nut and the platen and makes setting up easier and detolerances this arrangement so that the mountings 131, 133 may be secured to respective fixed parts of the base structure without requiring precision machining of the seats for the mountings.

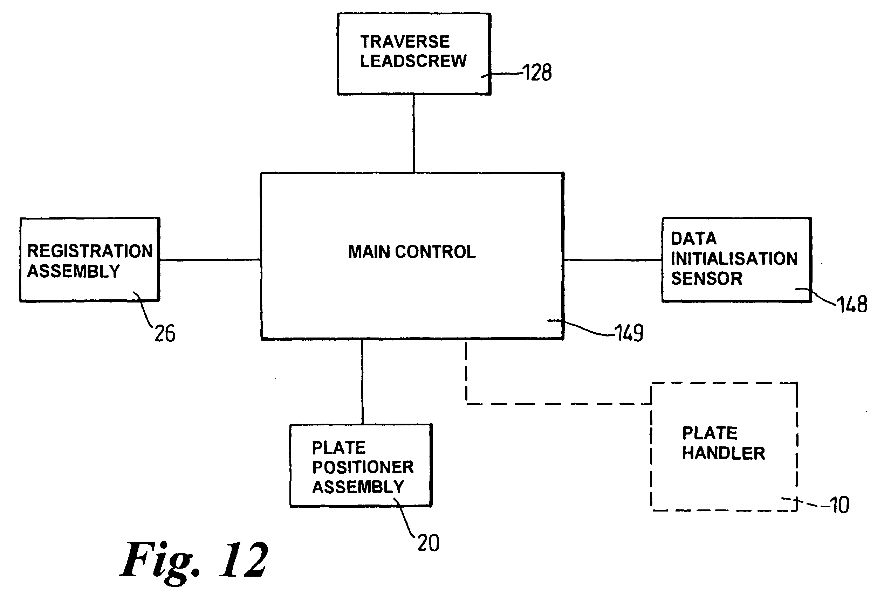

Also illustrated in Figure 1 is the register flag 146 which is mounted on the platen bracket 137 and which co-operates with an optical sensor 148 to provide to the control system an initialisation signal for initialising the data output when the platen has been rapidly traversed to the rear of the apparatus (as viewed in Figure 1), and then reversed to move forwardly under the scanner head assembly at expose speed. To initialise the data output, the control system 149 (Figure 12) needs to know precisely when the platen is aligned with a known reference position, so that the control system can control the leadscrew motor 128 and the scanner head assembly 28 to cause the first scan line to be at exactly the right position on the plate on the platen. The leadscrew motor is a high precision stepper motor. To minimise speed dependent error in the control system, the control system causes the platen to park at the rear of the machine a short distance (e.g. 2mm) to the rear of where the platen needs to be for the first scan line. The control system then drive the platen forwardly at the expose speed so that the leaving speed of the flag for the sensor is the expose speed and so the data initialisation signal created when the flag 146 trips the optical sensor 148 is generated at the expose speed to maximise accuracy.

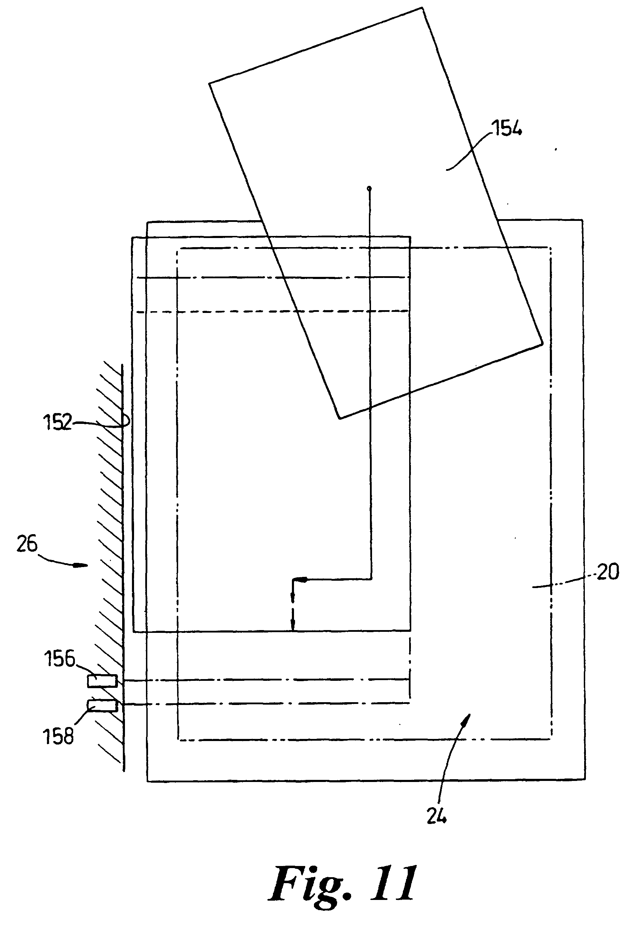

Referring now to Figure 11 this is a Figure showing schematically the registration edge 152 of the registration assembly 26, and the first and second switch positions. In operation, as shown schematically, a plate 154 (which for illustration is shown in an exaggerated, non-aligned configuration) is introduced transversely to slide over the support surface of the platen 24. The positioning assembly 20 (shown in chain dotted lines) is operated as to be described below to urge the plate 154 into engagement with the registration edge 152 and to cause any angular adjustment necessary to align the edge of the plate with the registration edge 152. Thereafter the plate positioning assembly the plate advances at relatively high speed in a direction parallel to the registration edge 152 (but keeping the plate edge in registration therewith) until the leading edge of the plate trips a normally dosed first position switch 156. Once the control system detects tripping of the first position switch 156, it causes the plate positioning assembly to reduce the advance speed of the plate to a slow creep to allow it to approach and then trip a second position switch 158. As soon as this occurs, the drive to the plate is stopped, leaving the plate in a fully registered position.

To reduce the wiring between the registration assembly 26 and the control system, the first and second position switches 156 and 158 are wired in parallel, with the first position switch being normally dosed and the second position switch being normally open. In this way, sequential opening of said first switch followed by closing of said second switch provides a pulse with two edges, the second edge indicating attainment of the second position.

### Operation

A cyde of operation will now be described. Initially the platen 24 is driven by the leadscrew arrangement 126, 128, 134 to a loading/unloading position in which the platen 24 urges the plate positioning frame 42 relative to the main chassis 36, against the spring bias, so that the cam pegs 44 are in the generally horizontal portion of the cam slots 40. In this configuration, the platen guide belts 59 are placed in a guide position just dear of the surface of the platen 24, ready to guide a plate over the concave surface of the platen 24. In this position, the plate positioning nip roller 78 hangs downwardly against the surface of the platen 24. The nip engagement drive 120 is actuated to cause the nip rollers 114 to protrude through the slots 118 to define a nip with the nip roller 78. The common drive motor 64 is operated to cause the inlet drive belt 74, the platen guide belts 59 and the platen nip roll 78 all to rotate at the same surface speed. At the same time the delivery belts 16 of the plate handling apparatus 12 are driven at the same surface speed and a plate is introduced via the slot 14 to be engaged on opposite sides by the inlet drive belts 74 and the delivery belts 16 to feed the plate over the edge of the platen 24. The plate is then caused to conform to the convex arcuate surface of the platen by means of the platen guide belts 59 . Thus guided, the leading edge of the plate passes over the surface of the platen 24 until it reaches the nip between the plate positioning nip roller 78 and the platen nip rollers 114 which then draw the plate and impart drive to pass the plate to an initial loaded position. At this point it should be noted that the forward side of the plate (when the apparatus is viewed in the configuration of Figure 1) is still some distance away from the registration edge 152 of the registration assembly 26. The common drive 64 and the drive to the delivery belt 16 is then stopped and the leadscrew 128 operated to move the platen towards the registration edge 152. This longitudinal movement is transferred to the plate positioning main frame 42 via the drive abutments 102 such that the suspended device moves longitudinally with the platen and the plate thereon, towards the registration edge. This slides the plate into registration with the registration edge 152, correcting any angular misalignment, as described previously in relation to Figure 11.

Having provided registration along the edge 152, the drive motor 64 is energised again to drive the plate at relatively high speed towards the first position switch 156. During this coarse movement (and subsequent final fine movement) drive is imparted to the plate via the platen guide belts 59 and the plate positioning nip roller 78 and the platen nip rollers 104, again with the same surface speed, so that there is no scrubbing of the emulsion surface. On tripping the first position switch 156, the drive motor speed reduces to allow the plate to approach the second position switch at relatively slow creep , for final registration. On tripping the second position switch 158 the plate is fully registered on the platen 24.

The leadscrew motor is operated again to move the platen further towards the registration edge 152 and to cause the plate positioning main frame 42 to move therewith and to cause the cam pegs 44 to enter the downwardly indined leg of the cam slots, thus urging the plate positioning assembly more firmly into engagement with the emulsion side of the plate to provide a first damping action. Suction is then applied to the platen so that the plate is secured to the drum by suction rather than by the plate positioning assembly and the nip roll engagement drive is disengaged. The control system then cause two precision punches 160 of conventional form to punch respective cut-outs in the registered edge of the plate. The platen 24 is then moved rearwardly towards the scanner head assembly 28. During the initial increments of longitudinal movement of the platen 24 relative to the base structure, the plate positioning assembly 24 moves with the platen, under the influence of the tension springs, such that the cam pegs 44 pass from the downwardly inclined (damping) portion of the cam slots 40 back to the level portion thereof (loading/unloading portion) and thence up and outwardly inclined leg to a "free" position in which the plate positioning assembly is well dear of the surface of the plate now secured by suction to the platen 24.

The platen 24 is then moved fully to the rear of the machine (as viewed in Figure 1) and then driven at the expose speed towards the position where the plate is in the required position to receive the first scan line from the scanner head assembly. As noted previously, the optical sensor 148 provides the initialisation signal whilst the platen is moving at the expose speed. The scanner then exposes successive lines along the plate as it is moved past the scanner head by means of the leadscrew. When exposure has been completed, the platen is driven back to the initial load/unload position (i.e. just spaced from the registration edge 152). In doing so the drive abutment 102 on the platen 24 engage the plate positioning assembly and drive it so that the cam pegs 40 move from the upwardly indined "clear" leg to the horizontal (load/unload) position. The suction to the platen is then released so that the plate is free to move relative to the platen and the drive motor 64 is operated simultaneously with the drive for the delivery belts 16 to feed the plate off the platen back into the plate handling apparatus for developing and processing.

Figure 12 illustrates the control system for the above embodiment, comprising a main control which controls the platen movement by the leadscrew 128, the plate position assembly 20, the scanner head assembly 28, and the plate handing apparatus 10.

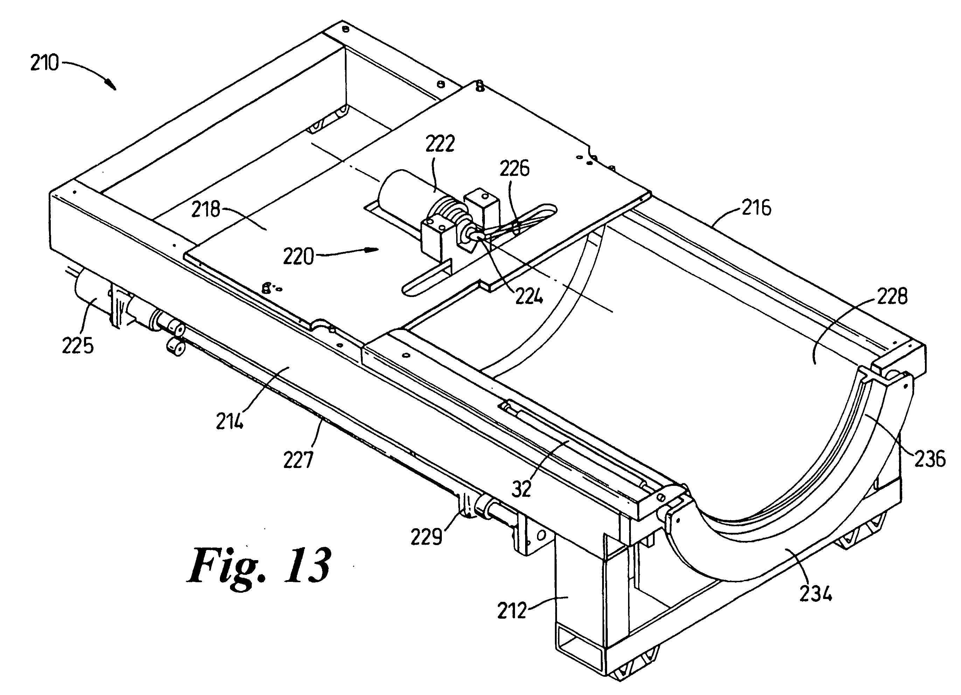

Referring now to Figures 13 to 15 there is shown a further embodiment of image setting apparatus in accordance with the invention which is of a similar configuration to that of the embodiment just described. The features employed in the previous embodiment may be incorporated in the embodiment to be described and vice versa.

The second embodiment of image setting apparatus 210 comprises a fixed base frame 212 comprising two parallel longitudinal structural side members 214 and 216. At about 2/3 down the length of the members 214 and 216, as viewed in the Figure, a rigid plate 218 spans the two side members 214, 216 and mounts, in optically rigid fashion, a scanner head assembly 220. The scanner head may take any conventional form such as a polygonal mirror spinner or an oscillating galvanometer mirror. The assembly comprises a motor 222 and a scanning mirror 224. In the illustrated embodiment, modulated light from a laser source is directed onto the mirror by a series of mirrors (not shown).

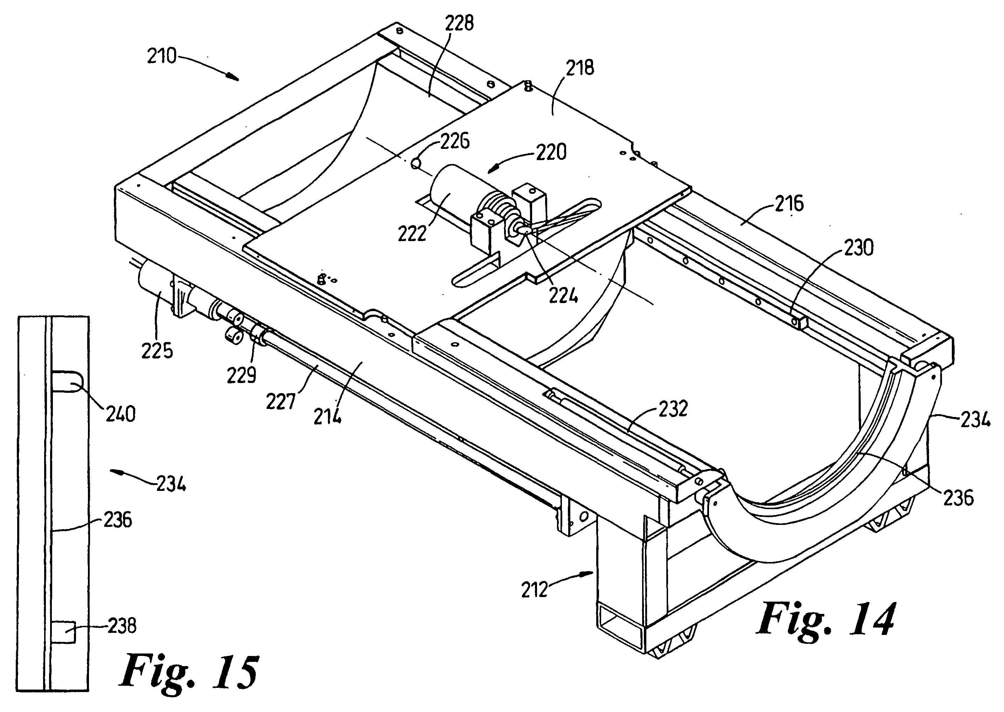

The side support members 214 and 216 also slidably support a curved, upwardly facing platen 228 by means of precision guides 230 (only one of which is seen (in Figure 14)) for movement between the registration position, at the front of the apparatus (as shown in Figure 13) and an extended position, at the rear of the machine, as shown in Figure 14. The platen has a vacuum supply (not shown) to enable a plate to be damped to the upper surface thereof. In this embodiment the platen 228 has a cylindrical upper surface although, with suitable adjustment to the optics, the platen could be curved and non-cylindrical or flat. A feed roll 232 is mounted on the side member 214 to allow a plate to be fed to and/or from the platen surface when the vacuum has been reduced or released.

The platen 228 is traversed between its registration position and its extended position by means of a platen drive motor 225 via a leadscrew 227 and travelling nut 229. At the front end of the machine there is a registration/punch mounting member 234 curved to be co-planar with the adjacent edge of the platen 228, to provide a substantially continuous surface when the platen is in its registration position. The registration/punch mounting member 34 has a reference rib 236 projecting radially inwardly and defining a datum surface for a printing plate (not shown) on the platen 228. The registration/punch mounting member may simply provide a single datum surface as in Figure 13 or it may provide more active registration. For example, as shown in Figure 15, the registration/punch mounting member 234 may additionally comprise respective rectangular and solid u-shaped punches 238, 240 which are provided to punch correspondingly shaped cut outs from the edge of a plate registered with the rib 236. Alternatively, the punches 238 and 240 could be replaced by pegs or lugs which engage corresponding apertures or cut outs in pre-punched plates.

In use, with the platen 228 parked near the registration position as shown in Figure 13, touching or adjacent the registration/punch mounting member 234, a plate is fed onto the surface of the platen 228 using the roller 232, whilst the plate is held by a temporary plate holding mechanism. The platen is then moved up against the registration/punch mounting member 234 to remove any skew. Once the plate is in position, its registration against the registration/punch mounting member 234 may be checked and any adjustment made. The vacuum to the platen 28 is then applied firmly to hold the plate against the platen. Where the registration/punch mounting member includes active punches (as opposed to a passive registration surface) the punches are operated to punch cut outs from the registration edge of the plate.

Thereafter, the scanner head assembly is activated and the modulated beam 226 is scanned by the mirror 224 over the surface of the plate held on the platen 228, as the platen traverses away from the registration/punch mounting member 234 towards the rear of the machine. On completion of the exposure, the platen is returned to its registration position and the plate removed. It will however be appreciated that the plate may be exposed in either direction, or in alternate directions where shuttle working is required.

## Claims

1. An image setting apparatus (10), including:-
a platen means (24) of curved or part-cylindrical form about an elongate axis and defining an internal support surface for a plate to be exposed;
a scanner head assembly (28) aligned with said axis;
a plate positioning assembly (20) mounted to be relatively moveable with respect to said platen means (24) and arranged for loading and unloading in use plates from and/or to a plate handling station (12) disposed generally laterally with respect to said platen means;
said plate positioning assembly (20) including moveable guide means (59) for contacting in use the exposed side of said plate and to guide the plate, with nil or relatively low movement of the contacting surface of said guide means (59) relative to said exposed side, as the plate (154) is offered laterally to the platen means (24) and is moved over, and conforms to, the internal support surface of the platen means (24) towards a loaded position in which the relative position of the plate is at or near the position required during exposure of the plate, and for subsequently assuming a position in which it is clear of the exposed side of the loaded plate, and
traverse drive means (126, 128) for effecting relative movement of the platen relative to said scanner head assembly, wherein said platen is moved parallel to said axis.

2. An image setting apparatus according to Claim 1, wherein said moveable guide means (59) comprises at least one endless platen guide belt (59) having an external drive surface for contacting and engaging in use the exposed side of said plate (154), with nil or relatively low relative movement, the or each endless belt (59) following a path including a section conforming to the curved internal support surface over which said plate passes in use.

3. An image setting apparatus, according to Claim 2, wherein said plate (154) positioning assembly includes two endless platen guide belts (59) arranged to follow respective spaced planar paths at longitudinally spaced locations over said internal support surface.

4. An image setting apparatus according to Claim 2 or Claim 3, wherein the or each platen guide belt (59) includes a generally compressible conformable outer pressure surface defining said drive surface for engaging the exposed surface of the plate (154) during movement of the plate.

5. An image setting apparatus according to any of Claims 2 to 4, wherein the inner surface of said platen guide belt (59) is toothed.

6. An image setting apparatus according to any of the preceding claims including a motor (64) for driving said moveable guide means (59) at substantially the same surface speed in use as the plate (154) as it moves towards its loaded position.

7. An image setting apparatus according to any of the preceding claims, wherein said plate positioning assembly (20) includes an inner drive means (18) for engaging the plate (154) as it passes the edge of the platen when passing to or from the loading/unloading station.

8. An image setting apparatus according to Claim 7, wherein said inlet drive means (18) comprises at least one inlet drive belt means (74) drivable to assist movement of said plate means in use.

9. An image setting apparatus according to Claim 8, wherein said inlet drive means comprises a plurality of spaced inlet drive belt means disposed to move in parallel planes.

10. An image setting apparatus according to Claim 8 or 9 (when dependent on Claim 2 or any Claim dependent thereon) including a motor (64) for driving said inlet drive belt means (74) in use.

11. An image setting apparatus according to Claim 10 or 9 (when dependent on Claim 2 or any Claim dependent thereon), wherein a common motor drives said inlet drive belt means (74) and said platen guide belt means (59).

12. an image setting apparatus according to any of the preceding claims, wherein said plate positioning assembly (20) further includes a plate positioner nip roller (78) engageable with a corresponding platen nip roller (114) associated with said platen means (24) and operable in use to draw a plate (154) introduced into the nip towards the loaded position.

13. An image setting apparatus according to Claim 12, wherein said plate positioner nip roller (78) comprises a generally cylindrical roller (78) having a compressible drive surface.

14. An image setting apparatus according to Claim 12 or 13 including a motor (64) for driving said plate positioner nip roller (78).

15. An image setting apparatus according to Claim 14 when dependent on Claim 11, wherein a common motor drives said inlet drive belt means (74), said platen guide belt means (59) and said plate positioner nip roller (78).

16. An image setting apparatus according to any of Claims 12 to 15, wherein said plate positioner nip roller (78) and said platen nip roller (114) are relatively moveable between engaged and disengaged positions.

17. An image setting apparatus according to Claim 16, wherein a nip engagement drive means (120) is provided for moving said platen nip roller (114) between engaged and disengaged positions.

18. An image setting apparatus according to any of the preceding Claims, wherein said plate positioning assembly (20) is moveable between a first (loading/unloading) position in which said moveable guide means (59) is in contact with or in close proximity to said internal support surface, and a second (clear) position in which the moveable guide means (59) is spaced clear of said internal support surface.

19. An image setting apparatus according to Claim 18, wherein said plate positioning assembly (20) is movable to a third (clamping) position in which the movable guide means is urged in use into contact with the exposed surface of the plate (114) to clamp said plate firmly against the internal support surface.

20. An image setting apparatus according to Claims 18 or 19, wherein said plate positioning assembly (20) is mounted on a relatively fixed structure (36) for limited movement in the longitudinal direction against a bias, and said plate positioning assembly (20) and said fixed structure (36) include co-operating cam/cam follower means (40, 44) responsive to longitudinal movement of the plate positioning assembly (20) relative to said fixed structure (36) to cause said plate positioning assembly (20) to move from said free position to said loading/unloading position when said platen means (24) moves towards the loading/unloading position.

21. An image setting apparatus according to Claim 20, wherein said cam/cam follower means (40, 44) are responsive to longitudinal movement of said plate positioning assembly (20) to cause said plate positioning assembly to move to said clamping position when said platen means (24) is moved from its loading/unloading position to a registration position.

22. An image setting apparatus according to any of the preceding claims, wherein said scanner head assembly (28) is fixed and said transverse drive means (126, 128) is operable to move said platen means.

23. An image setting apparatus according to any of the preceding claims wherein said platen means (24) and said plate positioning assembly (20) include co-operable drive abutments (102) engageable in use to transfer drive in the longitudinal direction from said platen means (24) to said plate positioning assembly (20) as the traverse drive means (126, 128) moves the platen (24) in use from an exposed position towards the loading/unloading position and beyond.

24. An image setting apparatus according to Claim 23, wherein said drive abutments (102) transfer a further increment of longitudinal movement of said plate positioning assembly (20) as the traverse drive means (126, 128) moves the platen from the loading/unloading position to a registration position.

25. An image setting apparatus according to any of the preceding claims, wherein said platen means (24) further includes suction means (92, 94, 96) for applying suction to said support surface securely to hold a plate (154) on said support surface during exposure thereof.

26. An image setting apparatus according to Claim 25, wherein said suction means (92, 94, 96) includes control means responsive to said relative traverse movement to apply or release said suction as said platen moves towards said register point, or away therefrom, respectively.

27. An image setting apparatus as claimed in any of the preceding Claims, further including:-
a leadscrew drive arrangement (126, 128) for moving said platen means (24), said arrangement comprising:-
a leadscrew (126);
mounting means (130, 132) for rotatably supporting opposite end regions of said leadscrew;
drive means for driving one end of said leadscrew (128);
a leadscrew nut (134) threadedly engaged on said leadscrew (12), and
a flexural coupling arrangement (135) connecting said leadscrew nut (134) to said platen means (124).

28. An image setting apparatus according to Claim 27, wherein said flexural coupling arrangement (135) comprises a flexural connection constraining relative angular movement of said platen means (24) relative to said leadscrew nut (134) to two mutually orthogonal axes.

29. An image setting apparatus as claimed in any of the preceding Claims, wherein said platen means (24) is mounted on a fixed base structure (22) for linear movement between a registration position and an extended position, said apparatus further including:-
registration means (26) fixedly mounted on said base structure (22) to lie adjacent to an associated edge region of said platen means when said platen means (24) is in its registration position;
said registration means (26) having means (152) for co-operating with the edge region of a sheet to be exposed to register it with respect to the platen means (24) when the platen means is in its registration position, and
retaining means (92, 94, 96) operable in use to clamp a sheet to be exposed against the support surface,
wherein said scanner head assembly (28) is fixedly mounted with respect to said base structure (22) and operable in use to scan an expose beam over the sheet to be exposed.

30. An image setting apparatus according to Claim 29, including one or more passive datum surfaces (152) against which the edge or edges of a plate may (154) be placed in registration.

31. An image setting apparatus according to Claim 29 or Claim 30, further comprising punch means (160) for punching out one or more registration holes or cut outs in an edge region of the plate.

32. An image setting apparatus according to Claim 29, comprising one or more registration lugs (26) for co-operating in use with complementary cut outs in the edge regions of the plate.

33. An image setting apparatus as claimed in any of Claims 29 to 32, wherein the scanner head assembly (28) is disposed on the base structure (22) such that, when said platen means (24) is in said registration position with an edge region adjacent said registration means (26), an opposed edge region of said platen lies adjacent said scanner head assembly.

34. An image setting apparatus according to any of Claims 29 to 33, further including plate registration control means (149) operable to control said plate positioning means (20) and said traverse means (126, 128) during a loading routine:
initially to position said platen (24) a short distance away from said registration means (26);
thereafter to cause said plate positioning means (20) to draw a plate (154) onto said platen means (24) from said plate handling station (12) and to advance said plate (154) until the leading edge thereof reaches a threshold position;
thereafter to cause said traverse means (126, 128) to move said platen means (24) to a registration position adjacent said registration means (26) to effect registration in one sense, and
thereafter to cause said plate positioning means (20) to advance said plate (154) until the leading edge reaches a datum position corresponding to a second registration.

35. An image setting apparatus according to Claim 34 including first and second position detectors (156, 158) for detecting reaching said threshold position and reaching said datum position respectively.

36. An image setting apparatus according to Claim 35, wherein said detectors (156, 158) are electronically connected in parallel in a sensing circuit with said first position detector (158) normally closed and said second position detector (156) normally open, whereby operation of said first and second detectors in sequence causes a pulse output.

37. An image setting apparatus according to any of the preceding Claims, wherein said platen means (24) is moveably mounted on a base structure (22) for movement relative to said scanner head assembly, the arrangement further comprising:-
a sensor (148) is mounted on one of said relatively fixed structure (22) and said platen means (24);
a co-operating element (146) mounted on the other thereof;
the sensor (14) and the co-operating element (146) together defining a position sensor for providing an initialisation signal for outputting data when the platen means (24) and the scanner head (28) are in a predetermined longitudinal position;
control means (149) for controlling said traverse drive means (126, 128) and said scanner head assembly (28) in accordance with the data to be exposed on said plate (154) in use;
wherein said control means (149) is operable, at the beginning of the expose routine, to cause said platen (24) to traverse such that the platen is moving at the expose speed when the position sensor outputs said initialisation signal.

38. An image setting apparatus according to any of the preceding Claims, and suitable for multiple voltage use, comprising a suction arrangement (92, 94, 96) for applying suction to hold a plate (154) to be exposed to said platen, said suction arrangement comprising a suction pump driven by an A.C. motor, the motor having multiple voltage windings and the arrangement including means in use for detecting the applied mains voltage and for selecting the appropriate windings in said motor.

## Patentansprüche

1. Bildsetzgerät (10), umfassend:
eine Platteneinrichtung (24) von gekrümmter oder teilzylindrischer Form um eine Längsachse, die eine interne Stützfläche für die zu exponierende Platte definiert ausgerichtet auf eine Abtastkopfanordnung (28),
eine Plattenpositionierungsanordnung (20), die relativ bewegbar montiert ist in Bezug auf die Platteneinrichtung (24) und angeordnet zum Beladen und Entladen beim Einsatz von Platten von und/ oder zu einer Plattenhandhabungsstation (12), die im Wesentlichen seitlich im Bezug auf die Platteneinrichtung angeordnet ist;
wobei die Plattenpositionierungsanordnung (20) eine bewegbare Führungseinrichtung (59) einschließt, zum Kontaktieren beim Einsatz der exponierten Seite der Platte zum Führen der Platte mit keiner oder einer relativ geringen Bewegung der kontaktierenden Oberfläche der Führungseinrichtung (59) relativ zu der exponierten Seite, während die Platte (154) seitlich zur Platteneinrichtung (24) angeordnet und konform über die interne Stützfläche der Platteneinrichtung (24) bewegbar ist in Richtung auf eine beladene Position, in welcher die relative Position der Platte bei oder in der Nähe der Position ist, die erforderlich ist während des Exponierens der Platte, und zum anschließenden Einnehmen einer Position, in welcher sie frei ist von der exponierten Seite der beladenen Platte, und
eine Querantriebseinrichtung (126, 128) zur Bewirkung einer Relativbewegung der Platte relativ zur Abtastkopfanordnung, wobei die Platte parallel zur Achse geführt ist.

2. Bildsetzgerät gemäß Anspruch 1, wobei die bewegbare Führungseinrichtung (59) mindestens einen endlosen Plattenführungsgurt (59) umfasst, mit einer äußeren Antriebsoberfläche zum Kontaktieren und Ergreifen beim Einsatz der exponierten Seite der Platte (154) mit keiner oder einer relativ geringen Relativbewegung, wobei jeder endlose Gurt (59) einem Weg folgt, der einen Abschnitt einschließt, welcher mit der gekrümmten internen Stützfläche übereinstimmt, über welche die Platte beim Einsatz hinweg läuft.

3. Bildsetzgerät gemäß Anspruch 2, wobei die Plattenpositionierungsanordnung (154) zwei endlose Plattenführungsgurte (59) umfasst, angeordnet zum Folgen entsprechend beabstandeter ebener Wege an längs beabstandeten Stellen über die interne Stützoberfläche.

4. Bildsetzgerät gemäß Anspruch 2 oder Anspruch 3, wobei der oder jeder Plattenführungsgurt (59) eine im wesentlichen kompressible in Übereinstimmung führbare äußere Druckfläche umfasst, welche die Antriebsoberfläche definiert zum Ergreifen der exponierten Oberfläche der Platte (154) während der Bewegung der Platte.

5. Bildsetzgerät gemäß einem der Ansprüche 2 bis 4, wobei die innere Oberfläche des Plattenführungsgurtes (59) gezahnt ist.

6. Bildsetzgerät gemäß einem der vorangehenden Ansprüche einschließlich eines Motors (64) zum Antrieb der bewegbaren Führungseinrichtung (59) mit im Wesentlichen der gleichen Oberflächengeschwindigkeit beim Einsatz der Platte (154), während sie sich in Richtung auf die beladene Position bewegt.

7. Bildsetzgerät gemäß einem der vorangehenden Ansprüche, wobei die Plattenpositionierungsanordnung (20) eine innere Antriebseinrichtung (18) umfasst zum Ergreifen der Platte (154), während sie über die Kante der Platte läuft beim Übergang zur oder von der Belade-/Entladestation.

8. Bildsetzgerät gemäß Anspruch 7, wobei die Zulaufantriebseinrichtung (18) mindestens eine Zulaufantriebsgurteinrichtung (74) umfasst, die antreibbar ist zur Unterstützung der Bewegung der Platteneinrichtung beim Einsatz.

9. Bildsetzgerät gemäß Anspruch 8, wobei die Zulaufantriebseinrichtung eine Mehrzahl von beabstandeten Zulaufantriebsgurteinrichtungen umfasst, die angeordnet sind für eine Bewegung in parallelen Ebenen.

10. Bildsetzgerät gemäß Anspruch 8 oder 9 (in Abhängigkeit von Anspruch 2 oder irgendeinem hiervon abhängigen Anspruch) einschließend einen Motor (64) zum Antrieb der Zulaufantriebsgurteinrichtungen (74) beim Einsatz.

11. Bildsetzgerät gemäß Anspruch 10 oder 9 (in Abhängigkeit von Anspruch 2 oder irgendeinem hiervon abhängigen Anspruch), wobei ein gemeinsamer Motor die Zulaufantriebsgurteinrichtungen (74) und die Plattenführungsgurteinrichtungen (59) antreibt.

12. Bildsetzgerät gemäß einem der vorangehenden Ansprüche, wobei die Plattenpositionierungsanordnung (20) darüber hinaus eine Plattenpositionierquetschwalze (78) umfasst, die zum Eingriff führbar ist mit einer entsprechenden Plattenquetschwalze (114), die der Platteneinrichtung (24) zugeordnet ist und beim Einsatz betreibbar ist, um eine Platte (154), die in die Quetschstelle eingeführt wird, in Richtung auf die beladene Position zu ziehen.

13. Bildsetzgerät gemäß Anspruch 12, wobei die Plattenpositionierquetschwalze (78) eine im Wesentlichen zylindrische Walze (78) umfasst mit einer kompressiblen Antriebsoberfläche.

14. Bildsetzgerät gemäß Anspruch 12 oder 13, einschließend einen Motor (64) zum Antrieb der Plattenpositionierquetschwalze (78).

15. Bildsetzgerät gemäß Anspruch 14 in Abhängigkeit von Anspruch 11, wobei ein gemeinsamer Motor die Zulaufantriebsgurteinrichtungen (74), die Plattenführungsgurteinrichtungen (59) und die Plattenpositionierquetschwalze (78) antreibt.

16. Bildsetzgerät gemäß einem der Ansprüche 12 bis 15, wobei die Plattenpositionierquetschwalze (78) und die Plattenquetschwalze (114) relativ bewegbar sind zwischen Eingriffs- und Freigabepositionen.

17. Bildsetzgerät gemäß Anspruch 16, wobei eine Quetscheingriffsantriebseinrichtung (120) vorgesehen ist zur Bewegung der Plattenquetschwalze (114) zwischen der Eingriffs- und Freigabeposition.

18. Bildsetzgerät gemäß einem der vorangehenden Ansprüche, wobei die Plattenpositionieranordnung (20) bewegbar ist zwischen einer ersten (Belade-/Entlade-) Position, in welcher die bewegbare Führungseinrichtung (59) in Kontakt mit oder in der Nähe der internen Stützfläche ist, und einer zweiten (Freisetz-) Position, in welcher die bewegbare Führungseinrichtung (59) einen Abstand von der internen Stützfläche besitzt.

19. Bildsetzgerät gemäß Anspruch 18, wobei die Plattenpositionieranordnung (20) bewegbar ist zu einer dritten (Klemm-) Position, in welcher die bewegbare Führungseinrichtung beim Einsatz in Kontakt gedrückt wird, mit der exponierten Oberfläche der Platte (114), um die Platte fest gegen die innere Stützfläche zu klemmen.

20. Bildsetzgerät gemäß Anspruch 18 oder 19, wobei die Plattenpositionieranordnung (20) montiert ist auf einer relativ festen Struktur (36) für eine begrenzte Bewegung in Längsrichtung gegen einen Druck, und die Plattenpositionieranordnung (20) sowie die feste Struktur (36) eine kooperierende Nocken-/Nockenstößeleinrichtung (40, 44) einschließt, welche anspricht auf eine Längsbewegung der Plattenpositionieranordnung (20) relativ zu der festen Struktur (36), um die Plattenpositionieranordnung (20) zu veranlassen, sich von der freien Position zu der Belade-/Entladeposition zu bewegen, wenn sich die Platteneinrichtung (24) in Richtung auf die Belade-/Entladeposition bewegt.

21. Bildsetzgerät gemäß Anspruch 20, wobei die Nocken-/Nockenstößeleinrichtung (40, 44) auf eine Längsbewegung der Plattenpositionieranordnung (20) anspricht, um die Plattenpositionieranordnung zu veranlassen, sich in Richtung auf die Klemmposition zu bewegen, wenn die Platteneinrichtung (24) von ihrer Belade-/Entladeposition zu einer Registrierposition bewegt wird.

22. Bildsetzgerät gemäß einem der vorangehenden Ansprüche, wobei die Abtastkopfanordnung (28) fixiert ist und die Querantriebseinrichtung (126, 128) betreibbar ist, um die Platteneinrichtung zu bewegen.

23. Bildsetzgerät gemäß einem der vorangehenden Ansprüche, wobei die Platteneinrichtung (24) und die Plattenpositioniereinrichtung (20) kooperierende Antriebsanschläge (102) umfassen, die beim Einsatz zum Eingriff führbar sind, um einen Antrieb in Längsrichtung von der Platteneinrichtung (24) zur Plattenpositionieranordnung (24) zu treiben, während die Querantriebseinrichtung (126, 128) die Platte (24) beim Einsatz von einer exponierten Position in Richtung auf die Belade-/Entladeposition und darüber hinaus bewegt.

24. Bildsetzgerät gemäß Anspruch 23, wobei die Antriebsanschläge (102) einen weiteren Anstieg der Längsbewegung der Plattenpositionieranordnung (20) übertragen, wenn die Querantriebseinrichtung (126, 128) die Platte von der Belade-/Entladeposition zu einer Registrierposition bewegt.

25. Bildsetzgerät gemäß einem der vorangehenden Ansprüche, wobei die Platteneinrichtung (24) darüber hinaus eine Saugeinrichtung (92, 94, 96) einschließt, zur Anlage eines Sogs an die Stützfläche, um eine Platte (154) sicher auf der Stützfläche zu halten während deren Exposition.

26. Bildsetzgerät gemäß Anspruch 25, wobei die Saugeinrichtung (92, 94, 96) eine Steuereinrichtung umfasst, die anspricht auf die relative Querbewegung zum Anlegen oder Freisetzen des Sogs, während die Platte sich in Richtung auf bzw. von dem Registrierpunkt wegbewegt.

27. Bildsetzgerät gemäß einem der vorangehenden Ansprüche, darüber hinaus umfassend:
eine Antriebsspindelanordnung (126, 128) zum Bewegen der Platteneinrichtung (24), wobei diese Anordnung folgendes umfasst:
eine Antriebsspindel (126);
eine Montageeinrichtung (130, 132) zum drehbaren Abstützen einander gegenüberliegender Endregionen der Antriebsspindel,
eine Antriebseinrichtung zum Antrieb eines Endes der Antriebsspindel (128);
eine Schlossmutter (134), die in Gewindeeingriff steht mit der Antriebsspindel (128), sowie
eine biegbare Kopplungsanordnung (135), die die Schlossmutter (134) an die Platteneinrichtung (124) ankoppelt.

28. Bildsetzgerät gemäß Anspruch 27, wobei die biegbare Kopplungsanordnung (135) einen biegbaren Anschluß umfasst, der die relative Winkelbewegung der Platteneinrichtung (24) relativ zu der Schlossmutter (134) auf zwei gegenseitig aufeinander orthogonalen Achsen einschränkt.

29. Bildsetzgerät gemäß einem der vorangehenden Ansprüche, wobei die Platteneinrichtung (24) auf einer festen Basisstruktur (22) montiert ist für eine Linearbewegung zwischen einer Registrierposition und einer erstreckten Position, wobei das Gerät folgendes umfasst:
eine Registriereinrichtung (26), die fest auf der Basisstruktur (22) derart montiert ist, dass sie benachbart zu einem zugeordneten Kantenbereich der Platteneinrichtung liegt, wenn die Platteneinrichtung (24) sich in ihrer Registrierposition befindet;
wobei die Registriereinrichtung (26) eine Einrichtung (152) einschließt zur Kooperation mit der Kantenregion einer zu exponierenden Schicht, um hierauf ausgerichtet zu sein in Bezug auf die Platteneinrichtung (24), wenn die Platteneinrichtung sich in ihrer Registrierposition befindet, sowie
eine Halteeinrichtung (92, 94, 96), die betreibbar ist beim Einsatz, um eine Schicht, die zu exponieren ist, gegen die Stützfläche zu klemmen,
wobei die Abtastkopfanordnung (28) fest montiert ist in Bezug auf die Basisstruktur (22) und betreibbar ist, um einen Exponierstrahl über die exponierte Schicht zu führen.

30. Bildsetzgerät gemäß Anspruch 29 einschließlich einer oder mehrerer passiver Richtwertoberflächen (152), gegen welche die Kante oder die Kanten einer Platte (154) bei der Registrierung platzierbar sind.

31. Bildsetzgerät gemäß Anspruch 29 oder Anspruch 30, darüber hinaus umfassend eine Stanzeinrichtung (160) zum Ausstanzen einer oder mehrerer Registrieröffnungen oder Ausschnitte in einer Kantenregion der Platte.

32. Bildsetzgerät gemäß Anspruch 29, umfassend eine oder mehrere Registrierlaschen (26) für eine Kooperation im Einsatz mit komplementären Ausschnitten in den Kantenbereichen der Platte.

33. Bildsetzgerät gemäß einem der Ansprüche 29 bis 32, wobei die Abtastkopfanordnung (28) an der Basisstruktur (22) derart angeordnet ist, dass dann, wenn die Platteneinrichtung (24) sich in der Registrierposition mit einer Kantenregion benachbart der Registriereinrichtung (26) befindet, eine entgegengesetzte Kantenregion der Platte benachbart der Abtastkopfanordnung liegt.

34. Bildsetzgerät gemäß einem der Ansprüche 29 bis 33, darüber hinaus umfassend eine Plattenregistriersteuereinrichtung (149), die betreibbar ist zur Steuerung der Plattenpositioniereinrichtung (20) und der Querantriebseinrichtung (126, 128) während einer Beladungsroutine:
anfängliches Positionieren der Platte (24) in einem kleinen Abstand weg von der Registriereinrichtung (26);
danach zum Veranlassen der Plattenpositioniereinrichtung (20), eine Platte (151) auf die Platteneinrichtung (24) von der Plattenhandhabungsstation (12) zu ziehen und die Platte (154) weiterzuführen, bis ihre Führungskante eine Schwellwertposition erreicht;
danach zum Veranlassen der Quertransporteinrichtung (126, 128), die Platteneinrichtung (24) zu einer Registrierposition nahe der Registriereinrichtung (26) zu führen, zur Bewirkung der Registrierung in einem Sinn, und
danach zum Veranlassen der Plattenpositioniereinrichtung (20), die Platte (154) weiterzuführen, bis die Führungskante eine Richtwertposition erreicht, die einer zweiten Registrierung entspricht.

35. Bildsetzgerät gemäß Anspruch 34, umfassend erste und zweite Positionsdetektoren (156, 158) zur Erfassung des Erreichens der Schwellwertposition bzw. des Erreichens der Richtwertposition.

36. Bildsetzgerät gemäß Anspruch 35, wobei die Detektoren (156, 158) elektronisch parallel geschalten sind in einem Erfassungsschaltkreis, wobei der erste Positionsdetektor (158) normalerweise geschlossen und der zweite Positionsdetektor (156) normalerweise offen ist, wodurch der Betrieb des ersten und des zweiten Detektors in Folge einen Impulsausgang bewirkt.

37. Bildsetzgerät gemäß einem der vorangehenden Ansprüche, wobei die Platteneinrichtung (24) bewegbar montiert ist auf einer Basisstruktur (22) zur Bewegung relativ zur Abtastkopfanordnung, wobei die Anordnung darüber hinaus Folgendes umfasst:
einen Sensor (148), der entweder auf der relativ festen Struktur (20) oder der Platteneinrichtung (24) montiert ist;
ein kooperierendes Element (146), welches auf der jeweils anderen Einrichtung montiert ist;
wobei der Sensor (14) und das kooperierende Element (146) zusammen einen Positionssensor definieren, zur Bereitstellung eines Initialisierungssignals zur Ausgabe von Daten, wenn die Platteneinrichtung (24) und der Abtastkopf (28) sich in einer vorbestimmten Längsposition befinden;
eine Steuereinrichtung (149) zur Steuerung der Querantriebseinrichtung (126, 128) und der Abtastkopfanordnung (28) entsprechend den Daten, die beim Einsatz auf der Platte (154) zu exponieren sind;
wobei die Steuereinrichtung (149) betreibbar ist zu Beginn der Exponierroutine dahingehend, dass die Platte (24) veranlasst wird, sich derart zu bewegen, dass die Platte sich mit Exponiergeschwindigkeit bewegt, wenn der Positionssensor das Initialisierungssignal abgibt.

38. Bildsetzgerät gemäß einem der vorangehenden Ansprüche, geeignet für den Einsatz mehrerer Spannungen mit einer Sauganordnung (92, 94, 96) zur Anlage eines Sogs, um eine zu exponierende Platte (124) an der Platte zu halten, wobei die Sauganordnung eine Saugpumpe umfasst, angetrieben durch einen Wechselstrommotor, und der Motor mehrere Spannungswicklungen aufweist und wobei die Anordnung eine Einrichtung beim Einsatz umfasst zum Erfassen der angelegten Netzspannung und zur Auswahl der entsprechenden Wicklungen in dem Motor.

## Revendications

1. Appareil (10) de composition d'images, comprenant :
- un moyen de berceau (24) de forme cintrée ou partiellement cylindrique autour d'un axe allongé et définissant une surface de support interne pour une plaque devant être exposée ;
- un ensemble (28) de tête de balayage, aligné avec ledit axe ;
- un ensemble (20) de positionnement de plaque, monté pour être mobile relativement par rapport audit moyen de berceau (24) et disposé pour charger et décharger lors de l'utilisation des plaques à partir de et/ou sur une station (12) de manipulation de plaque, disposée généralement latéralement par rapport audit moyen de berceau ;
- ledit ensemble (20) de positionnement de plaque comprenant un moyen de guidage mobile (59) pour venir en contact lors de l'utilisation avec le côté exposé de ladite plaque afin de guider la plaque, avec un mouvement nul ou relativement faible de la surface de contact dudit moyen de guidage (59) par rapport audit côté exposé, alors que la plaque (154) est offerte latéralement au moyen de berceau (24) et est déplacée sur, et se conforme à, la surface de support interne du moyen de berceau (24) vers une position chargée dans laquelle la position relative de la plaque est à ou près de la position requise durant l'exposition de la plaque, et pour prendre par la suite une position dans laquelle il est dégagé du côté exposé de la plaque chargée, et
- des moyens d'entraînement transversal (126, 128) pour effectuer un mouvement relatif du berceau par rapport audit ensemble de tête de balayage, dans lequel ledit berceau est déplacé parallèlement audit axe.

2. Appareil de composition d'images selon la revendication 1, dans lequel ledit moyen de guidage mobile (59) comprend au moins une courroie sans fin (59) de guidage de berceau ayant une surface d'entraînement externe pour venir en contact et engager lors de l'utilisation le côté exposé de ladite plaque (154), avec un mouvement relatif nul ou relativement faible, la ou chaque courroie sans fin (59) suivant un trajet comprenant une section se conformant à la surface de support interne cintrée sur laquelle ladite plaque passe lors de l'utilisation.

3. Appareil de composition d'images selon la revendication 2, dans lequel ledit ensemble de positionnement de la plaque (154) comprend deux courroies sans fin (59) de guidage de berceau, disposées pour suivre des trajets plans espacés respectifs à des emplacements espacés longitudinalement sur ladite surface de support interne.

4. Appareil de composition d'images selon la revendication 2 ou la revendication 3, dans lequel la ou chaque courroie (59) de guidage de berceau comprend une surface de pression externe, conformable, généralement compressible, définissant ladite surface d'entraînement en vue de l'engagement de la surface exposée de la plaque (154) durant le mouvement de la plaque.

5. Appareil de composition d'images selon l'une quelconque des revendications 2 à 4, dans lequel la surface interne de ladite courroie (59) de guidage de berceau est dentée.

6. Appareil de composition d'images selon l'une quelconque des revendications précédentes, comprenant un moteur (64) pour entraîner ledit moyen de guidage mobile (59) sensiblement à la même vitesse de surface lors de l'utilisation que la plaque (154) alors qu'elle se déplace vers sa position chargée.

7. Appareil de composition d'images selon l'une quelconque des revendications précédentes, dans lequel ledit ensemble (20) de positionnement de plaque comprend un moyen d'entraînement interne (18) pour engager la plaque (154) alors qu'elle passe la bordure du berceau lors du passage à ou à partir de la station de chargement/déchargement.

8. Appareil de composition d'images selon la revendication 7, dans lequel ledit moyen d'entraînement d'entrée (18) comprend au moins un moyen (74) de courroie d'entraînement d'entrée actionnable pour aider au mouvement dudit moyen de plaque lors de l'utilisation.

9. Appareil de composition d'images selon la revendication 8, dans lequel ledit moyen d'entraînement d'entrée comprend une pluralité de moyens de courroie d'entraînement d'entrée espacés, disposés pour se déplacer dans des plans parallèles.

10. Appareil de composition d'images selon l'une des revendications 8 ou 9 (lorsqu'elle est dans la dépendance de la revendication 2 ou de toute revendication dépendant de celle-ci), comprenant un moteur (64) pour entraîner ledit moyen (74) de courroie d'entraînement d'entrée lors de l'utilisation.

11. Appareil de composition d'images selon l'une des revendications 10 ou 9 (lorsqu'elle est dans la dépendance de la revendication 2 ou de toute revendication dépendant de celle-ci), dans lequel un moteur commun entraîne ledit moyen (74) de courroie d'entraînement d'entrée et ledit moyen (59) de courroie de guidage de berceau.

12. Appareil de composition d'images selon l'une quelconque des revendications précédentes, dans lequel ledit ensemble (20) de positionnement de plaque comprend en outre un rouleau de pincement (78) de positionnement de plaque, apte à s'engager avec un rouleau de pincement (114) de berceau correspondant, associé audit moyen de berceau (24) et actionnable lors de l'utilisation pour tirer une plaque (154) introduite dans la région de pincement vers la position chargée.

13. Appareil de composition d'images selon la revendication 12, dans lequel ledit rouleau de pincement (78) de positionnement de plaque comprend un rouleau (78) généralement cylindrique ayant une surface d'entraînement compressible.

14. Appareil de composition d'images selon l'une des revendications 12 ou 13, comprenant un moteur (64) pour entraîner ledit rouleau de pincement (78) de positionnement de plaque.

15. Appareil de composition d'images selon la revendication 14 lorsqu'elle est dans la dépendance de la revendication 11, dans lequel un moteur commun entraîne ledit moyen (74) de courroie d'entraînement d'entrée, ledit moyen (59) de courroie de guidage de berceau et ledit rouleau de pincement (78) de positionnement de plaque.

16. Appareil de composition d'images selon l'une quelconque des revendications 12 à 15, dans lequel ledit rouleau de pincement (78) de positionnement de plaque et ledit rouleau de pincement (114) de berceau sont mobiles relativement entre des positions engagée et désengagée.

17. Appareil de composition d'images selon la revendication 16, dans lequel un moyen d'entraînement d'engagement de pincement (120) est disposé pour déplacer ledit rouleau de pincement (114) de berceau entre des positions engagée et désengagée.

18. Appareil de composition d'images selon l'une quelconque des revendications précédentes, dans lequel ledit ensemble (20) de positionnement de plaque est mobile entre une première position (de chargement/déchargement) dans laquelle ledit moyen de guidage mobile (59) est en contact avec ou à proximité étroite de ladite surface de support interne, et une seconde position (de dégagement) dans laquelle le moyen de guidage mobile (59) est espacé de façon à être dégagé de ladite surface de support interne.

19. Appareil de composition d'images selon la revendication 18, dans lequel ledit ensemble (20) de positionnement de plaque est déplaçable jusqu'à une troisième position (de serrage) dans laquelle le moyen de guidage mobile est sollicité lors de l'utilisation pour venir en contact avec la surface exposée de la plaque (154) afin de serrer ladite plaque fermement contre la surface de support interne.

20. Appareil de composition d'images selon l'une des revendications 18 ou 19, dans lequel ledit ensemble (20) de positionnement de plaque est monté sur une structure relativement fixe (36) en vue d'un mouvement limité dans la direction longitudinale à l'encontre d'une sollicitation, et ledit ensemble (20) de positionnement de plaque et ladite structure fixe (36) comprennent des moyens came/suiveur de came coopérants (40, 44), sensibles au mouvement longitudinal de l'ensemble (20) de positionnement de plaque par rapport à ladite structure fixe (36) afin d'amener ledit ensemble (20) de positionnement de plaque à se déplacer de ladite position libre à ladite position de chargement/déchargement lorsque ledit moyen de berceau (24) se déplace vers la position de chargement/déchargement.

21. Appareil de composition d'images selon la revendication 20, dans lequel lesdits moyens came/suiveur de came (40, 44) sont sensibles au mouvement longitudinal dudit ensemble (20) de positionnement de plaque pour amener ledit ensemble de positionnement de plaque à se déplacer jusqu'à ladite position de serrage lorsque ledit moyen de berceau (24) est déplacé de sa position de chargement/déchargement à une position d'alignement.

22. Appareil de composition d'images selon l'une quelconque des revendications précédentes, dans lequel ledit ensemble de tête de balayage (28) est fixe et ledit moyen d'entraînement transversal (126, 128) est actionnable pour déplacer ledit moyen de berceau.

23. Appareil de composition d'images selon l'une quelconque des revendications précédentes, dans lequel ledit moyen de berceau (24) et ledit ensemble (20) de positionnement de plaque comprennent des butées d'entraînement coopérantes (102) aptes à être engagées lors de l'utilisation pour transférer l'entraînement dans la direction longitudinale dudit moyen de berceau (24) audit ensemble (20) de positionnement de plaque alors que le moyen d'entraînement transversal (126, 128) déplace le berceau (24) lors de l'utilisation d'une position exposée vers la position de chargement/déchargement et au-delà.

24. Appareil de composition d'images selon la revendication 23, dans lequel lesdites butées d'entraînement (102) transfèrent un nouvel incrément de mouvement longitudinal dudit ensemble (20) de positionnement de plaque alors que le moyen d'entraînement transversal (126, 128) déplace le berceau de la position de chargement/déchargement à une position d'alignement.

25. Appareil de composition d'images selon l'une quelconque des revendications précédentes, dans lequel ledit moyen de berceau (24) comprend en outre un moyen de succion (92, 94, 96) pour appliquer une succion à ladite surface de support pour maintenir de façon sûre une plaque (154) sur ladite surface de support durant l'exposition de celle-ci.

26. Appareil de composition d'images selon la revendication 25, dans lequel ledit moyen de succion (92, 94, 96) comprend un moyen de commande sensible audit mouvement transversal relatif pour appliquer ou relâcher ladite succion alors que ledit berceau respectivement se déplace vers ledit point d'alignement, ou s'en éloigne.

27. Appareil de composition d'images selon l'une quelconque des revendications précédentes, comprenant en outre :
- un dispositif d'entraînement par tige filetée (126, 128) pour déplacer ledit moyen de berceau (24), ledit dispositif comprenant :
- une tige filetée (126) ;
- des moyens de montage (130, 132) pour supporter de façon tournante des régions d'extrémité opposée de ladite tige filetée ;
- des moyens d'entraînement pour entraîner l'une des extrémités de ladite tige filetée (128) ;
- un écrou de tige filetée (134) engagé par vissage sur ladite tige filetée (12) ; et
- un dispositif de couplage à flexion (135) connectant ledit écrou de tige filetée (134) audit moyen de berceau (124).

28. Appareil de composition d'images selon la revendication 27, dans lequel ledit dispositif de couplage à flexion (135) comprend une connexion à flexion contraignant un mouvement angulaire relatif dudit moyen de berceau (24) par rapport audit écrou de tige filetée (134) à deux axes perpendiculaires entre eux.

29. Appareil de composition d'images selon l'une quelconque des revendications précédentes, dans lequel ledit moyen de berceau (24) est monté sur une structure de base fixe (22) en vue d'un mouvement linéaire entre une position d'alignement et une position étendue, ledit appareil comprenant en outre :
- un moyen d'alignement (26) monté de façon fixe sur ladite structure de base (22) pour s'étendre de façon adjacente à une région de bordure associée dudit moyen de berceau lorsque ledit moyen de berceau (24) est dans sa position d'alignement ;
- ledit moyen d'alignement (26) ayant des moyens (152) pour coopérer avec la région de bordure d'une feuille à être exposée pour l'aligner par rapport au moyen de berceau (24) lorsque le moyen de berceau est dans sa position d'alignement ; et
- des moyens de retenue (92, 94, 96) actionnables lors de l'utilisation pour serrer une feuille devant être exposée contre la surface de support,
dans lequel ledit ensemble de tête de balayage (28) est monté de façon fixe par rapport à ladite structure de base (22) et actionnable lors de l'utilisation pour balayer un faisceau exposé sur la feuille devant être exposée.

30. Appareil de composition d'images selon la revendication 29, comprenant une ou plusieurs surfaces de référence passive (152) contre lesquelles la bordure ou les bordures d'une plaque (154) peuvent être placées en alignement.

31. Appareil de composition d'images selon la revendication 29 ou la revendication 30, comprenant en outre des moyens d'emboutissage (160) pour former par emboutissage un ou plusieurs trous ou une ou plusieurs découpes d'alignement dans une région de bordure de la plaque.

32. Appareil de composition d'images selon la revendication 29, comprenant une ou plusieurs pattes d'alignement (26) pour coopérer lors de l'utilisation avec des découpes complémentaires dans les régions de bordure de la plaque.

33. Appareil de composition d'images selon l'une quelconque des revendications 29 à 32, dans lequel l'ensemble de tête de balayage (28) est disposé sur la structure de base (22) de telle sorte que, lorsque ledit moyen de berceau (24) est dans ladite position d'alignement avec une région de bordure adjacente audit moyen d'alignement (26), une région de bordure opposée dudit berceau s'étend de manière adjacente audit ensemble de tête de balayage.

34. Appareil de composition d'images selon l'une quelconque des revendications 29 à 33, comprenant en outre un moyen (149) de commande d'alignement de plaque, actionnable pour commander ledit moyen (20) de positionnement de plaque et ledit moyen d'entraînement transversal (126, 128) durant un programme de chargement pour :
- positionner initialement ledit berceau (24) à une courte distance à l'opposé dudit moyen d'alignement (26) ;
- amener ensuite ledit moyen (20) de positionnement de plaque à tirer une plaque (154) sur ledit moyen de berceau (24) à partir de ladite station (12) de manipulation de plaque et faire avancer ladite plaque (154) jusqu'à ce que le bord avant de celle-ci atteigne une position de seuil ;
- amener ensuite ledit moyen d'entraînement transversal (126, 128) à déplacer ledit moyen de berceau (24) jusqu'à une position d'alignement adjacente audit moyen d'alignement (26) pour effectuer un alignement dans un sens ; et
- amener ensuite ledit moyen (20) de positionnement de plaque à faire avancer ladite plaque (154) jusqu'à ce que le bord avant atteigne une position de référence correspondant à un second alignement.

35. Appareil de composition d'images selon la revendication 34, comprenant des premier et second détecteurs de position (156, 158) pour détecter respectivement l'atteinte de ladite position de seuil et l'atteinte de ladite position de référence.

36. Appareil de composition d'images selon la revendication 35, dans lequel lesdits détecteurs (156, 158) sont connectés électroniquement en parallèle dans un circuit de détection avec ledit premier détecteur de position (158) normalement fermé et ledit second détecteur de position (156) normalement ouvert, ce par quoi l'actionnement desdits premier et second détecteurs de façon séquentielle provoque une sortie d'impulsion.

37. Appareil de composition d'images selon l'une quelconque des revendications précédentes, dans lequel ledit moyen de berceau (24) est monté de façon mobile sur une structure de base (22) en vue d'un mouvement relatif dudit ensemble de tête de balayage, le dispositif comprenant en outre :
- un détecteur (148) qui est monté sur l'une de ladite structure relativement fixe (22) et dudit moyen de berceau (24) ;
- un élément coopérant (146) monté sur l'autre de ladite structure et dudit moyen de berceau ;
- le détecteur (14) et l'élément coopérant (146) définissant conjointement un détecteur de position pour fournir un signal d'initialisation afin de sortir des données lorsque le moyen de berceau (24) et la tête de balayage (28) sont dans une position longitudinale prédéterminée ;
- un moyen de commande (149) pour commander ledit moyen d'entraînement transversal (126, 128) et ledit ensemble de tête de balayage (28) conformément aux données devant être exposées sur ladite plaque (154) lors de l'utilisation ;
dans lequel ledit moyen de commande (149) est actionnable, au début du programme d'exposition, pour amener ledit berceau (24) à traverser de telle sorte que le berceau se déplace à la vitesse d'exposition lorsque le détecteur de position émet ledit signal d'initialisation.

38. Appareil de composition d'images selon l'une quelconque des revendications précédentes, et approprié pour une utilisation sous des tensions multiples, comprenant un dispositif de succion (92, 94, 96) pour appliquer une succion afin de maintenir une plaque (154) devant être exposée sur ledit berceau, ledit dispositif de succion comprenant une pompe de succion entraînée par un moteur à courant alternatif, le moteur ayant des enroulements de tensions multiples et le dispositif comprenant des moyens lors de l'utilisation pour détecter la tension de secteur appliquée et pour sélectionner les enroulement appropriés dans ledit moteur.
